# EUROPÄISCHE PATENTANMELDUNG

(11) **EP 4 129 875 A1**
(43) Veröffentlichungstag der Anmeldung: **08.02.2023**
(21) Anmeldenummer: 22178703.9
(22) Anmeldetag: 13.06.2022
(51) Int. Cl.: B65H 20/16, B29C 55/14, B65H 35/02, B65H 35/04, B65H 23/022, B65H 23/04

(54) **EINFÜHREINRICHTUNG ZUM AUTOMATISCHEN EINFÜHREN EINER MATERIALBAHN IN EINE RECKANLAGE, ANLAGE SOWIE VERFAHREN**

(30) Priorität: 28.07.2021 DE 102021119557
(71) Anmelder: Brückner Maschinenbau GmbH & Co. KG, 83313 Siegsdorf (DE)
(72) Erfinder: Maetze, Michael, 83364 Neukirchen (DE); Pasternack, Boris, 83022 Rosenheim (DE); Höllmüller, Klaus, 83250 Marquartstein (DE)
(74) Vertreter: Flach Bauer & Partner Patentanwälte mbB

(57) **Zusammenfassung**

Eine Einführeinrichtung (16) zum automatischen Einführen einer Materialbahn (M) von einer ersten Reckanlage (12) in eine zweite Reckanlage (14) hat eine Fördervorrichtung (32), die dazu ausgebildet ist, zumindest einen Streifen der Materialbahn (M), die aus der ersten Reckanlage (12) austritt, an eine Transportvorrichtung (24) der zweiten Reckanlage (14) zu übergeben.

Ferner sind eine Anlage (10) und ein Verfahren gezeigt.

## Beschreibung

Die Erfindung betrifft eine Einführeinrichtung zum automatischen Einführen einer Materialbahn in eine Reckanlage, eine entsprechende Anlage sowie ein Verfahren hierzu.

Zur Herstellung dünner Kunststofffolien kommen Reckanlage zum Einsatz, die eine bereitgestellte Materialbahn recken, um die Dicke der Materialbahn zu verringern.

Üblich ist dabei, dass die Materialbahn zunächst einer Längsreckanlage zugeführt wird, um die Materialbahn in Längsrichtung, d. h. in Abzugsrichtung, zu recken. Im Anschluss wird die in Längsrichtung gereckte Materialbahn einer Querreckanlage zugeführt, die die Materialbahn quer zur Abzugsrichtung reckt und einen dünnen Materialfilm, beispielsweise einen Kunststofffilm herstellt.

Hierbei gestaltet sich der Übergang von der ersten Reckanlage zur zweiten Reckanlage schwierig, da das Einführen der Materialbahn, die von der ersten Reckanlage bereitgestellt wird, in die zweite Reckanlage während des Betriebs der ersten Reckanlage erfolgen muss.

Das Einführen der Materialbahn in die zweite Reckanlage erfolgt üblicherweise händisch mit einem hohen Personalaufwand. Zugleich muss zwischen der ersten Reckanlage und der zweiten Reckanlage ein genügend großer Platz vorgesehen sein, um eine sichere Handhabung der Materialbahn zu gewährleisten. Zusätzlich kann es erforderlich oder zumindest bevorzugt und damit wünschenswert sein die Materialbahn zwischenzuspeichern.

Es ist daher Aufgabe der Erfindung, eine Einführungseinrichtung sowie eine Anlage zum automatisierten Einführen einer Materialbahn von einer ersten Reckanlage in eine zweite Reckanlage bereitzustellen.

Die Aufgabe wird gelöst durch eine Einführeinrichtung zum automatischen Einführen einer Materialbahn von einer ersten Reckanlage in eine zweite Reckanlage, wobei die Einführeinrichtung eine Fördervorrichtung aufweist, die dazu ausgebildet ist, zumindest einen Streifen der Materialbahn, die aus der ersten Reckanlage austritt, an eine Transportvorrichtung der zweiten Reckanlage zu übergeben.

Mittels der Einführeinrichtung ist es nun möglich, die Materialbahn von der ersten Reckanlage zu empfangen und zuverlässig in die zweite Reckanlage einzuführen. Somit wird der Personalaufwand verringert und gleichzeitig können die erste Reckanlage und die zweite Reckanlage näher aneinander platziert werden, wodurch wertvolle Platz in einer Fertigungshalle frei wird.

Der Streifen ist zum Beispiel ein Streifen der Materialbahn mit geringerer Breite in Querrichtung als die gesamte Materialbahn. Der Streifen kann ein Führungstreifen sein.

In einer Ausführungsform weist die Einführeinrichtung eine Abtrenneinheit zum Trennen der Materialbahn von einem Einzugsmittel für die erste Reckanlage auf, wodurch keine Änderungen an der Art und Weise notwendig sind, wie die Materialbahn in die erste Reckanlage eingeführt wird.

Um die Materialbahn zwischen den beiden Reckanlagen sicher führen zu können, kann die Einführeinrichtung wenigstens eine Transportrolle, insbesondere ein Gerüst mit zwei Transportrollen aufweisen, die dazu ausgebildet sind, die Materialbahn entlang einer Zuführstrecke zu führen, insbesondere wobei das Gerüst dazu ausgebildet ist, ein Einzugsmittel der ersten Reckanlage zumindest teilweise parallel zur Zuführstrecke zu führen.

Das Einzugsmittel kann beispielsweise oder bevorzugt eine Einzugskette oder ein Einzugsriemen sein.

Beispielsweise weist die Einführeinrichtung eine erste Schneideinheit auf, die dazu ausgebildet ist, die Materialbahn in Abzugsrichtung in einen Führungsstreifen und einen Hauptstreifen zu teilen, oder die Einführeinrichtung weist zwei erste Schneideinheiten auf, die dazu ausgebildet sind, die Materialbahn in Abzugsrichtung in zwei Führungsstreifen und einen zwischen den Führungsstreifen liegenden Hauptstreifen zu teilen. Die Fördervorrichtung ist dazu ausgebildet, den einen Führungsstreifen oder die zwei Führungsstreifen der Transportvorrichtung der zweiten Reckanlage zu übergeben. Auf diese Weise ist es nicht notwendig, die gesamte Materialbahn auf einmal zu bewegen, wodurch die Handhabung vereinfacht wird.

Die erste Schneideinheit ist insbesondere in Querrichtung bewegbar.

Damit Führungsstreifen und Hauptstreifen durch die Fördervorrichtung unterschiedlich geführt werden können, kann bzw. können die erste Schneideinheit oder die zwei ersten Schneideinheiten zur Fördervorrichtung teilweise, insbesondere vollständig vorlaufend sein.

In einer Ausgestaltung hat die Einführeinrichtung einen Materialspeicher zur Aufnahme von überschüssigem Material der Materialbahn, insbesondere wobei der Materialspeicher ein Einzugswerk mit wenigstens zwei Rollen oder auch ein Hilfswickler sein kann. Durch den Materialspeicher wird es ermöglicht, dass zunächst nur der Führungsstreifen an die zweite Reckanlage übergeben wird.

Zum Beispiel sind die erste Schneideinheit und/oder die Abtrenneinheit zum Materialspeicher vorlaufend.

Um die Lage der Längskanten der Materialbahn zu bestimmen, kann die Einführeinrichtung wenigstens einen Sensor zur Detektion der Lage der Längskante der Materialbahn in Querrichtung aufweisen.

In einer Ausführungsform der Erfindung weist die Fördervorrichtung einen schwenkbaren Förderer auf, der zwischen einer ersten Position und einer zweiten Position schwenkbar ist, wobei der schwenkbare Förderer in der ersten Position eine erste Förderstrecke, insbesondere zum Materialspeicher hin, und in einer zweiten Position eine zweite Förderstrecke zur Transportvorrichtung der zweiten Reckanlage hin bereitstellt. Mittels des schwenkbaren Förderers kann gezielt und automatisch eingestellt werden, ob die Materialbahn zur zweiten Reckanlage gefördert werden soll oder nicht.

Der schwenkbare Förderer hat zum Beispiel ein Förderband, insbesondere ein Saugförderband, oder eine mit Rollen versehene Unterstützungsplatte.

Die Schwenkachse kann an der vorlaufenden Seite des Förderers angeordnet sein.

Der Förderer verläuft in erster Position beispielsweise senkrecht.

Um den Führungsstreifen und den Hauptstreifen unabhängig voneinander zu unterschiedlichen Zielen zu fördern, kann der schwenkbare Förderer in Querrichtung wenigstens zwei, insbesondere drei Abschnitte aufweisen, die unabhängig voneinander schwenkbar sind, wobei insbesondere zumindest ein äußerer Abschnitt oder z.B. auch die beiden äußeren Abschnitte zusätzlich in Querrichtung bewegbar sind.

In einer Ausgestaltung weist die Fördervorrichtung einen statischen Förderer auf, insbesondere ein Förderband oder eine mit Rollen versehene Unterstützungsplatte, der zum schwenkbaren Förderer nachlaufend ist und der in der zweiten Förderstrecke zur Transportvorrichtung der zweiten Reckanlage hin angeordnet ist. Durch die Verwendung eines statischen Förderers sind keine Anpassungen an den Einlaufschienen der zweiten Reckanlage nötig.

Das Förderband ist beispielsweise ein Saugförderband.

Der statische Förderer kann in Querrichtung wenigstens zwei Abschnitte aufweisen, die insbesondere jeweils einer der Einlaufschienen zugeordnet sind.

Beispielsweise übergibt der Förderer die Materialbahn an die Transportvorrichtung der zweiten Reckanlage.

Um die Zuverlässigkeit der Einführeinrichtung zu erhöhen, kann die Fördervorrichtung wenigstens eine Randanpresswalze aufweisen, die am nachlaufenden Ende des schwenkbaren Förderers angeordnet ist, wenn sich der schwenkbare Förderer in der zweiten Position befindet.

In einem weiteren Aspekt weist die Einführeinrichtung eine zweite Schneideinheit auf, die in Abzugsrichtung in der ersten Förderstrecke im Bereich des schwenkbaren Förderers vorgesehen ist, insbesondere in der nachlaufenden Hälfte des Bereichs des schwenkbaren Förderers. Mittels der zweiten Schneideinheit kann der Führungsstreifen zuverlässig in Querrichtung zerschnitten werden.

Beispielsweise weist die Einführeinrichtung eine dritte Schneideinheit auf, die in Abzugsrichtung in der zweiten Förderstrecke im Bereich des schwenkbaren Förderers vorgesehen ist, insbesondere in der vorlaufenden Hälfte des Bereichs des schwenkbaren Förderers, um im Falle einer Betriebsstörung die Materialbahn zu trennen.

In einer Ausführungsform der Erfindung weist die Fördervorrichtung eine Aufnahmestrecke und einen Industrieroboter mit einem Saugkopf oder einem Greifer auf, wobei der Industrieroboter dazu ausgebildet ist, zumindest einen Abschnitt der Materialbahn aus der Aufnahmestrecke aufzunehmen und der Transportvorrichtung der zweiten Reckanlage und/oder einem statischen Förderer der Fördervorrichtung zu übergeben. Mittels des Industrieroboters kann die Führungsbahn sicher und zuverlässig bewegt werden.

Zum Beispiel ist die Aufnahmestrecke ein Teil der Zuführstrecke und/oder der ersten Förderstrecke. Die Aufnahmestrecke kann sich senkrecht erstrecken.

Der statische Förderer kann in Querrichtung wenigstens zwei Abschnitte aufweisen, die insbesondere jeweils einer der Einlaufschienen zugeordnet sind.

Beispielsweise übergibt der Förderer die Materialbahn an die Transportvorrichtung der zweiten Reckanlage.

Um die Einführung des Hauptstreifens zu vereinfachen, kann eine Stütze für die Materialbahn vorgesehen sein, wobei die Stütze schwenkbar und/oder höhenverstellbar ist und in einer Stellung eine Förderstrecke von der Aufnahmestrecke zur Transportvorrichtung der zweiten Reckanlage und/oder zum statischen Förderer bereitstellt.

In einer Ausgestaltung weist die Einführeinrichtung eine zweite Schneideinheit auf, die in Abzugsrichtung im Bereich der Aufnahmestrecke angeordnet ist, insbesondere in der nachlaufenden Hälfte des Bereichs der Aufnahmestrecke. Mittels der zweiten Schneideinheit kann der Führungsstreifen zuverlässig in Querrichtung zerschnitten werden.

Die Einführeinrichtung kann eine dritte Schneideinheit aufweisen, die in Abzugsrichtung im Bereich der Stütze vorgesehen ist, insbesondere in der vorlaufenden Hälfte des Bereichs der Stütze, um im Falle einer Betriebsstörung die Materialbahn zu trennen.

In einer Ausgestaltung der Erfindung weist die Fördervorrichtung eine weitere erste Schneideinheit und einen zweiten Industrieroboter mit einem Saugkopf auf, wobei der zweite Industrieroboter dazu ausgebildet ist, einen weiteren Abschnitt der Materialbahn aus der Aufnahmestrecke aufzunehmen und der Transportvorrichtung der zweiten Reckanlage und/oder einem statischen Förderer der Fördervorrichtung zu übergeben. Auf diese Weise kann automatisiert mit zwei Führungsstreifen gearbeitet werden. Dies ist zum Beispiel bei breiten Materialbahnen vorteilhaft.

In einer weiteren Ausführungsform der Erfindung weist die Fördervorrichtung einen ersten Förderer und einen zweiten Förderer auf, der nachlaufend zum ersten Förderer ist, insbesondere wobei die erste Schneideinheit zwischen dem ersten und dem zweiten Förderer angeordnet ist und/oder der Materialspeicher nachlaufend zum zweiten Förderer vorgesehen ist. Dies ermöglicht eine besonders platzsparende Anordnung.

Der Förderer ist zum Beispiel ein Förderband, insbesondere ein Saugförderband, oder eine mit Rollen versehene Unterstützungsplatte.

Der erste Förderer und/oder der zweite Förderer können höhenverstellbar sein.

Um Materialbahnen verschiedener Breiten automatisch einführen zu können, kann der erste Förderer und/oder der zweite Förderer an wenigstens einer seiner Seiten in Abzugsrichtung einen schwenkbaren Unterstützungsflügel aufweisen, wobei die Schwenkachse des Unterstützungsflügels in Abzugsrichtung verläuft und der Unterstützungsflügel die Auflagefläche des jeweiligen Förderers in Querrichtung vergrößert, wenn er nach oben verschwenkt wird.

Ferner wird die Aufgabe gelöst durch eine Anlage zur Verarbeitung einer Materialbahn, mit einer ersten Reckanlage, insbesondere einer Längsreckanlage, einer zweiten Reckanlage, insbesondere einer Querreckanlage, sowie einer Einführeinrichtung wie zuvor beschrieben, insbesondere wobei die Einführeinrichtung zwischen der ersten Reckanlage und der zweiten Reckanlage angeordnet und dazu ausgebildet ist, die Materialbahn am Ausgang der ersten Reckanlage zu empfangen und in die zweite Reckanlage einzuführen.

Die zur Einführanlage diskutierten Merkmale und Vorteile gelten gleichermaßen für die Anlage und umgekehrt.

Beispielsweise hat die erste Reckanlage eine Transportstrecke, die an eine Zuführstrecke der Fördervorrichtung anschließt, um eine permanente Führung der Materialbahn zu gewährleisten.

Um die Materialbahn sicher aufzunehmen, kann die zweite Reckanlage eine Transportvorrichtung mit einem Paar Einlaufschienen aufweisen, insbesondere wobei die Einlaufschienen jeweils eine obere Führungsplatte aufweisen, die in Querrichtung verfahrbar ist und angetriebene Führungsrollen hat.

Insbesondere ist jede der Einlaufschienen separat in Querrichtung verfahrbar.

Beispielweise haben die Einlaufschienen jeweils eine Transportkette mit Kluppeneinheiten.

Die Führungsrollen können schräg zur Abzugsrichtung und zur Querrichtung sein.

Zur Gewährleistung, dass die Materialbahn sicher in die zweite Reckanlage eingeführt wird, kann die Fördervorrichtung an die Transportvorrichtung anschließen, insbesondere wobei der schwenkbare Förderer in der zweiten Position an die Einlaufschienen anschließt oder der statische Förderer an die Einlaufschienen anschließt oder der zweite Förderer zumindest teilweise zwischen den Einlaufschienen der zweiten Reckanlage angeordnet ist.

Die Aufgabe wird ferner gelöst durch ein Verfahren zum automatischen Einführen einer Materialbahn von einer ersten Reckanlage, insbesondere einer Längsreckanlage, zu einer zweiten Reckanlage, insbesondere einer Querreckanlage, mittels einer automatischen Einführeinrichtung. Das Verfahren hat die folgenden Schritte:
- Empfangen der Materialbahn von der ersten Reckanlage durch die Einführeinrichtung,
- Übergeben wenigstens eines Abschnitts der Materialbahn an die zweite Reckanlage durch die Einführeinrichtung.

Die zur Einführeinrichtung und/oder zur Anlage diskutierten Merkmale und Vorteile gelten gleichermaßen für das Verfahren und umgekehrt. Dabei sind die einzelnen Komponenten der Anlage bzw. der Einführeinrichtung dazu ausgebildet, die durch sie durchzuführenden Schritte auch auszuführen.

Insbesondere ist es zum Einführen nicht notwendig, dass der Betrieb der zweiten Reckanlage unterbrochen werden muss.

Damit keine Änderungen an der Art und Weise notwendig sind, wie die Materialbahn in die erste Reckanlage eingeführt wird, kann das Verfahren den folgenden weiteren Schritt umfassen:
- Trennen des Beginns der Materialbahn von einem Einzugsmittel für die erste Reckanlage durch eine Abtrenneinheit der Einführeinrichtung.

Beispielsweise umfasst das Verfahren die folgenden weiteren Schritte:
- Fördern der Materialbahn zu einem Materialspeicher der Einführeinrichtung,
- Teilen der Materialbahn in Abzugsrichtung in einen Führungsstreifen und einen Hauptstreifen mittels einer ersten Schneideinheit der Einführeinrichtung, oder Teilen der Materialbahn in Abzugsrichtung in zwei Führungsstreifen und einen zwischen den Führungsstreifen liegenden Hauptstreifen mittels zwei ersten Schneideinheiten der Einführeinrichtung,
- Abtrennen des einen Führungsstreifens oder der zwei Führungsstreifen in Querrichtung durch eine zweite Schneideinheit der Einführeinrichtung,
- Aufnehmen des einen Führungsstreifens oder der zwei Führungsstreifen durch eine Fördervorrichtung der Einführeinrichtung,
- Übergeben des einen Führungsstreifens oder der zwei Führungsstreifen an die zweite Reckanlage durch die Fördervorrichtung der Einführeinrichtung, und
- Befestigen, insbesondere Einkluppen einer Außenkante des einen Führungsstreifens oder jeweils einer Außenkante der zwei Führungsstreifen an einer Transportvorrichtung der zweiten Reckanlage.

Aufgrund der Verwendung eines Führungsstreifens ist es nicht notwendig, die gesamte Materialbahn auf einmal zu bewegen, wodurch die Handhabung vereinfacht wird.

Im Rahmen dieser Erfindung ist die Außenkante die vom Hauptstreifen bzw. der Mitte der Materialbahn abgewandte Kante des Führungsstreifens.

Um die Materiabahn während des Einführens zu spannen, kann die Materialbahn von einem Einzugswerk des Materialspeichers gegriffen werden und in den Materialspeicher gefördert werden.

In Ausführungsformen der Erfindung wird der schwenkbare Förderer, insbesondere der Abschnitt des schwenkbaren Förderers, auf denen der oder einer der Führungsstreifen läuft, in die zweite Position verfahren, wenn der entsprechende Führungsstreifen von der zweiten Schneideeinheit abgetrennt wurde. Oder der Saugkopf des Industrieroboters nimmt einen der Führungsstreifen auf und übergibt den Führungsstreifen dann an die zweite Reckanlage, wenn der jeweilige Führungsstreifen von der zweiten Schneideeinheit abgetrennt wurde. Oder, wenn der jeweilige Führungsstreifen von der zweiten Schneideeinheit abgetrennt wurde, verfährt die Einlaufschiene, die dem Führungsstreifen am nächsten ist, in Querrichtung zum zweiten Förderer hin, bis die Außenkante des Führungsstreifens in die Einlaufschiene eingreift. Auf jede dieser Weisen kann der Führungsstreifen sicher in die zweite Reckanlage eingeführt werden.

Um die Zuverlässigkeit des Einführens weiter zu verbessern, kann das Verfahren die folgenden weiteren Schritte umfassen:
- Verfahren der ersten Schneideeinheit in Querrichtung vollständig durch den Hauptstreifen, sodass der Führungsstreifen der Materialbahn entspricht, und
- Befestigen, insbesondere Einkluppen, der weiteren Kante der Materialbahn an der Transportvorrichtung der zweiten Reckanlage; oder
- Verfahren der zwei ersten Schneideeinheiten in Querrichtung aufeinander zu und anschließendes entfernen der Schneideinheiten aus der Materialbahn.

In Ausführungsformen der Erfindung wird der Abschnitt des schwenkbaren Förderers, auf denen der Hauptstreifen läuft, in die zweite Position verfahren, bevor oder während die erste Schneideeinheit verfahren wird. Oder die Stütze wird verschwenkt oder in der Höhe verstellt, sodass eine Förderstrecke von der Aufnahmestrecke zur Transportvorrichtung der zweiten Reckanlage und/oder dem statischen Förderer bereitstellt ist, bevor oder während die erste Schneideeinheit verfahren wird. Oder, sobald, bevor oder nachdem die erste Schneideeinheit verfahren wird, verfährt die andere der Einlaufschienen in Querrichtung zum zweiten Förderer hin, bis die weitere Kante der Materialbahn in die Einlaufschiene eingreift.

In einem weiteren Aspekt der Erfindung umfasst das Verfahren die folgenden weiteren Schritte:
- Durchtrennen der gesamten Materialbahn durch die dritte Schneideinheit, und
- Fördern der Materialbahn zu dem Materialspeicher der Einführeinrichtung.

Dadurch ist es nicht nötig, die erste Reckanlage zu stoppen, falls eine Störung der zweiten Reckanlage auftritt.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Fig. 1:: einen Teil eine Anlage zur Verarbeitung einer Materialbahn gemäß einer ersten Ausführungsform der Erfindung mit einer Einführeinrichtung gemäß einer ersten Ausführungsform der Erfindung schematisch in einer Seitenansicht,
- Fig. 2:: eine perspektivische Darstellung eines schwenkbaren Förderers der Einführeinrichtung gemäß Figur 1,
- Fig. 3:: die Anlage aus Figur 1 während eines Schritts des erfindungsgemäßen Verfahrens,
- Fig. 4:: eine Ansicht der Materialbahn die in einen Materialspeicher der Einführeinrichtung während des Schritts gemäß Figur 3 gefördert wird,
- Figs. 5, 6:: die Anlage bzw. die Materialbahn entsprechend den Figuren 3 bzw. 4 während eines weiteren Schritts des erfindungsgemäßen Verfahrens,
- Figs. 7, 8:: die Anlage bzw. die Materialbahn entsprechend den Figuren 3 bzw. 4 während eines weiteren Schritts des erfindungsgemäßen Verfahrens,
- Figs. 9, 10:: die Anlage bzw. die Materialbahn entsprechend den Figuren 3 bzw. 4 während eines weiteren Schritts des erfindungsgemäßen Verfahrens,
- Fig. 11:: die Anlage entsprechend Figur 4 während eines Schritts zur Unterbrechung der Materialproduktion,
- Fig. 12:: eine zweite Ausführungsform der erfindungsgemäßen Anlage mit einer zweiten Ausführungsform der erfindungsgemäßen Einführeinrichtung in einer Schnittansicht, die der Figur 3 entspricht,
- Fig. 13:: eine Vorderansicht der Materialbahn entsprechend der Figur 4,
- Figs. 14, 15:: die Anlage bzw. die Materialbahn entsprechend Figuren 12 bzw. 13 während eines weiteren Schritts des Verfahrens,
- Figs. 16, 17:: die Anlage bzw. die Materialbahn entsprechend den Figuren 12 bzw.13 während eines weiteren Schritts des Verfahrens,
- Figs. 18, 19:: die Anlage bzw. die Materialbahn gemäß den Figuren 12 und 13 während eines weiteren Schritts des Verfahrens,
- Fig. 20:: die Anlage gemäß der zweiten Ausführungsform während eines Schritts zur Unterbrechung der Produktion,
- Fig. 21:: eine dritte Ausführungsform einer erfindungsgemäßen Anlage mit einer dritten Ausführungsform einer erfindungsgemäßen Einführeinrichtung teilweise in Seitenansicht,
- Fig. 22:: einen Förderer der Einführeinrichtung der Anlage gemäß Figur 21 in perspektivischer Ansicht, und
- Fig. 23:: eine perspektivische Teilansicht einer Einlaufschiene der zweiten Reckanlage der Anlage gemäß Figur 21 sowie den Förderer der Einführeinrichtung,
- Figs. 24-27:: die Anlage gemäß Figur 21 in einer Vorderansicht während verschiedenen Schritten bei der Ausführung einer dritten Ausführungsform des erfindungsgemäßen Verfahrens.

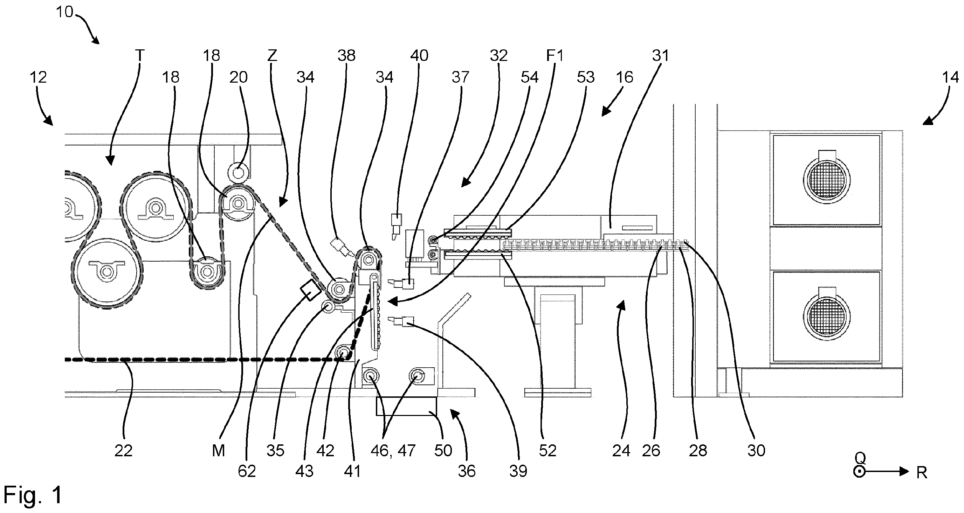

In Figur 1 ist in einer schematischen Seitenansicht ein Teil einer Anlage 10 zur Verarbeitung einer Materialbahn M gezeigt, die eine erste Reckanlage 12, eine zweite Reckanlage 14 sowie eine Einführeinrichtung 16 aufweist.

Die Materialbahn M ist beispielsweise ein Kunststofffilm, beispielsweise aus Polypropylen (PP) oder aus Polyethylenterephthalat (PET).

Die erste Reckanlage 12 und die zweite Reckanlage 14 dienen dazu, aus einer vergleichsweisen dicken Materialbahn, eine äußerst dünne Materialbahn 2 bzw. einen Materialfilm herzustellen.

Im Rahmen dieser Erfindung ist die Abzugsrichtung R diejenige Richtung, in die die Materialbahn M durch die Anlage 10 gefördert wird, in den Zeichnungen von links nach rechts.

Die Querrichtung Q ist dabei die horizontale Richtung quer zur Abzugsrichtung R. Die in der Anlage korrekt geführte Materialbahn M erstreckt sich stets - bis auf ein etwaiges Durchhängen - in Querrichtung Q.

Die erste Reckanlage 12 ist beispielsweise eine Längsreckanlage (Machine Direction Orienter - MDO).

Die erste Reckanlage 12 weist verschiedene Rollen 18, wenigstens eine Anpresswalze 20 sowie ein Einzugsmittel 22, zum Beispiel eine Einzugskette auf.

Die Rollen 18 und die Anpresswalze 20 bilden eine Transportstrecke T, die in einen Ausgang mündet, an dem die Materialbahn M aus der ersten Reckanlage 12 ausgegeben wird.

Das Einzugsmittel 22, hier also die Einzugskette, ist parallel zur Transportstrecke T geführt, beispielsweise auf nicht gezeigten Zahnrädern und/oder Führungsrollen.

Das Einzugsmittel 22 erstreckt sich ebenfalls aus dem Ausgang heraus, durch Abschnitte der Einführeinrichtung 16 und wird schließlich in der ersten Reckanlage 12 wieder rückgeführt.

Die zweite Reckanlage 14 ist im gezeigten Ausführungsbeispiel eine Querreckanlage (Transvere Direction Orienter - TDO).

Die zweite Reckanlage 14 hat eine Transportvorrichtung 24 mit zwei Transportschienen 26, auf denen jeweils eine Vielzahl an Kluppeneinheiten 28 mittels einer Transportkette 30 durch die zweite Reckanlage 14 bewegt werden.

Abweichend vom gezeigten Ausführungsbeispiel kann die Reckanlage 14 und insbesondere die Querreckanlage (TDO) in bekannter Weise auch in Form einer Simultanreckanlage ausgebildet sein. Diese besitzt dann keine Kette. Anstelle dessen werden die Kluppen mittels Linearmotoren angetrieben und bewegt. Linearmotor-angetriebene Reckanlagen (beispielsweise auch in Form von simultan-Reckanlagen - was aber nicht zwangsläufig so sein muss sondern grundsätzlich auch für Querreckanlagen gilt) sind beispielsweise aus den Vorveröffentlichungen EP 455 632 A1, DE 44 36 676 A1, DE 10 2014 013 901 A1 oder beispielsweise auch aus der WO 89/12543 A1 oder der DE 44 41 020 C1 als bekannt zu entnehmen, worauf ausdrücklich verwiesen wird.

Die Transportvorrichtung 24 weist zudem zwei Einlaufschienen 31 auf, die jeweils Teile einer der Transportschienen 26 darstellen. Die Einlaufschienen 31 bilden einen Eingang der zweiten Reckanlage 14, der der ersten Reckanlage 12 zugewandt ist.

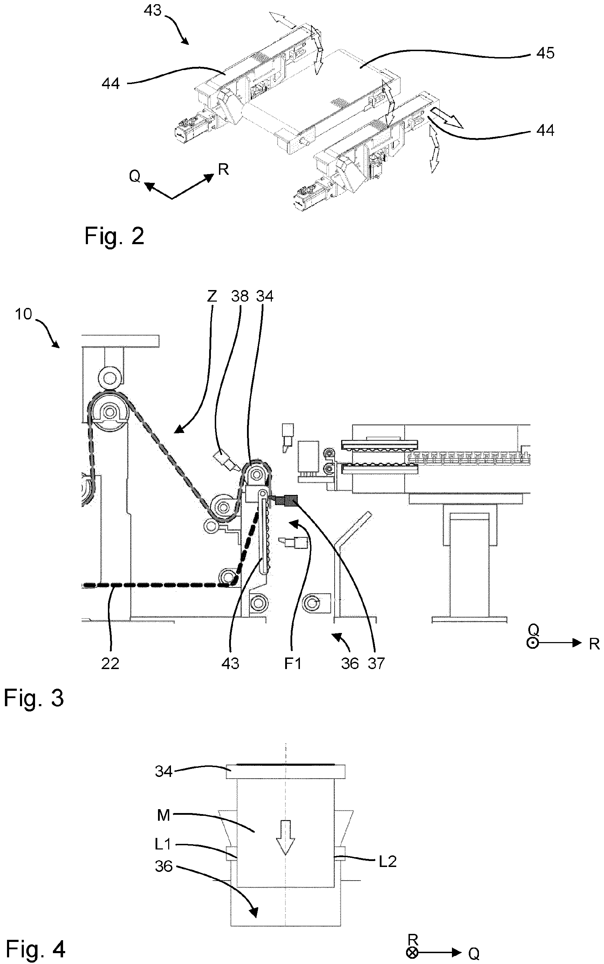

An den Einlaufschienen 31 kann die Materialbahn M in die Transportvorrichtung 24 der zweiten Reckanlage 14 eingeführt werden. Dies geschieht beispielsweise dadurch, dass die Materialbahn M mit ihren Längskanten L1, L2 (Fig. 4) in Abzugsrichtung R in die Kluppeneinheiten 28 der an der entsprechenden Seite vorgesehenen Einlaufschiene 31 eingesetzt wird und die Kluppeneinheiten 28 geschlossen werden. Dieser Vorgang wird auch "einkluppen" genannt. Dadurch greifen die Kluppeneinheiten 28 die Materialbahn M und bewegen diese in den Ofen der zweiten Reckanlage 14 hinein.

Die Einlaufschienen 31 haben einen Abstand zueinander, der jedoch variabel ist. Hierzu können die Einlaufschienen 31 in Querrichtung Q einzeln verfahren werden.

Die Einführeinrichtung 16 ist zwischen dem Ausgang der ersten Reckanlage 12 und dem Eingang der zweiten Reckanlage 14 angeordnet.

Die Einführeinrichtung 16 ist dazu ausgebildet, die Materialbahn M am Ausgang der ersten Reckanlage 12 zu empfangen und in die Einlaufschienen 31 der zweiten Reckanlage 14 einzuführen.

Die Einführeinrichtung 16 weist eine Fördervorrichtung 32 mit zwei Transportrollen 34 und einer Anpressrolle 35, einen Materialspeicher 36, eine Abtrenneinheit 37, eine erste Schneideinheit 38, eine zweite Schneideinheit 39 und eine dritte Schneideinheit 40 auf.

Die Transportrollen 34 der Fördervorrichtung 32 sind beispielsweise an einem Gerüst 41 der Einführeinrichtung 16 angeordnet. Das Gerüst 41 kann separat von der ersten Reckanlage 12 ausgeführt sein oder ein Teil eines Rahmens oder Gerüstes der ersten Reckanlage 12 sein.

Die Transportrollen 34 sind auf dem Gerüst 41 zum Beispiel als sogenannte S-Umschlingung angeordnet, wobei die vorlaufende der beiden Transportrollen 34 niedriger angeordnet ist als die nachlaufende Transportrolle 34.

Das kann auch umgekehrt sein, dass die nachlaufende Transportrolle 34 niedriger angeordnet ist als die vorlaufende Transportrolle, sofern die Materialbahn von unten aus der Reckanlage 12 läuft.

Die Transportrollen 34, insbesondere die nachlaufende Transportrolle 34 ist beispielsweise eine angetriebene Saugwalze.

Die Anpressrolle 35 kann an der vorlaufenden Transportrolle 34 angeordnet sein, insbesondere unterhalb davon.

Die Transportrollen 34 definieren dabei eine Zuführstrecke Z für die Materialbahn M, die an den Ausgang der ersten Reckanlage 12 anschließt.

Parallel zur Zuführstrecke Z verläuft das Einzugsmittel 22, hier also die Einführkette, der ersten Reckanlage 12, wobei das Gerüst 41 dazu ausgebildet ist, das Einzugsmittel 22 entsprechend parallel zur Zuführstrecke Z zu führen.

Hierzu kann das Gerüst 41 Zahnräder oder Führungsrollen aufweisen, die entsprechend den Transportrollen 34, beispielsweise mit den gleichen Drehachsen, ausgeführt sind.

Zudem kann das Gerüst 41 ein Zahnrad bzw. Führungsrolle 42 zur Rückführung des Einzugsmittels 22 zur ersten Reckanlage 12 haben.

Somit läuft das Einzugsmittel 22, hier die Einzugskette, entgegen der üblichen Aufbauten im Stand der Technik, zumindest teilweise außerhalb der ersten Reckanlage 12.

Die Fördervorrichtung 32 weist neben den Transportrollen 34 im in Figur 1 gezeigten ersten Ausführungsbeispiel einen schwenkbaren Förderer 43 auf, der ebenfalls am Gerüst 41 befestigt ist.

Der schwenkbare Förderer 43 ist freigestellt in Figur 2 dargestellt.

Der schwenkbare Förderer 43 hat in Querrichtung Q drei unabhängig voneinander agierende Abschnitte, nämlich zwei Randabschnitte 44 sowie einen dazwischenliegenden mittleren Abschnitt 45.

Die Abschnitte 44, 45 sind jeweils mit ihrem vorlaufenden Ende am Gerüst 41 zu einer in Querrichtung Q verlaufenden Schwenkachse schwenkbar befestigt.

Darüber hinaus sind die Randabschnitte 44 in Querrichtung Q bewegbar, um unterschiedlich breite Materialbahnen M sicher abstützen zu können.

Jeder der Abschnitte 44, 45 weist ein Förderband, insbesondere ein Saugförderband auf, um die Materialbahn M vom vorlaufenden Ende zu dem nachlaufenden Ende zu bewegen.

Denkbar ist auch, dass die Abschnitte 44, 45 je eine Unterstützungsplatte mit angetriebenen Rollen aufweisen, um die Materialbahn M zu fördern.

Die Fördervorrichtung 32 weist im in Figur 1 gezeigten Ausführungsbeispiel außerdem einen statischen Förderer 52 auf.

Der statische Förderer 52 ist beispielsweise ein Förderband, insbesondere ein Saugförderband, oder eine mit Rollen versehene Unterstützungsplatte.

Der statische Förderer 52 weist in Querrichtung Q zwei unabhängig voneinander agierende Abschnitte auf, wobei jede der Abschnitte jeweils einer der Einlaufschienen 31 der zweiten Reckanlage 14 zugeordnet ist.

Beispielsweise sind die Abschnitte des statischen Förderers 52 an der zugeordneten Einlaufschienen 31 befestigt.

Der statische Förderer 52 kann eine obere Unterstützungsplatte 53 aufweisen, die zur Förderung von Streifen der Materialbahn M ausgebildet ist. Hierzu kann die obere Unterstützungsplatte 53 nach unten verfahren, um den jeweiligen Streifen 64, 66 von der Oberseite her zu fördern.

Der statische Förderer 52 ist somit zum schwenkbaren Förderer 43 nachlaufend.

Am nachlaufenden Ende des schwenkbaren Förderers 43 und/oder zwischen dem schwenkbaren Förderer 43 und dem statischen Förderer 52 können zwei Randanpresswalzen 54 vorgesehen sein, die lediglich im Randbereich der Förderstrecke F2 angeordnet sind.

Wie in Figur 1 zu sehen, ist das vorlaufende Ende des schwenkbaren Förderers 43 nachlaufend zur Transportrolle 34, insbesondere unmittelbar unterhalb der Transportrolle 34 angeordnet, sodass der schwenkbare Förderer 43 direkt an die Zuführstrecke Z anschließt.

Der schwenkbare Förderer 43, bzw. jeder der Abschnitte 44, 45 des schwenkbaren Förderers 43 kann unabhängig voneinander eine erste Position und eine zweite Position einnehmen.

In Figur 1 ist die erste Position dargestellt, in der sich der schwenkbare Förderer 43, bzw. die entsprechenden Abschnitte 44, 45 senkrecht nach unten verlaufen.

In dieser ersten Position stellt der erste Förderer 76 eine erste Förderstrecke F1 bereit. Die erste Förderstrecke F1 geht vom vorlaufenden Ende des schwenkbaren Förderers 43 aus, d.h. dass sie unmittelbar an die Zuführstrecke Z anschließt, und verläuft zum Materialspeicher 36 hin, genauer gesagt zum Einzugswerk 46.

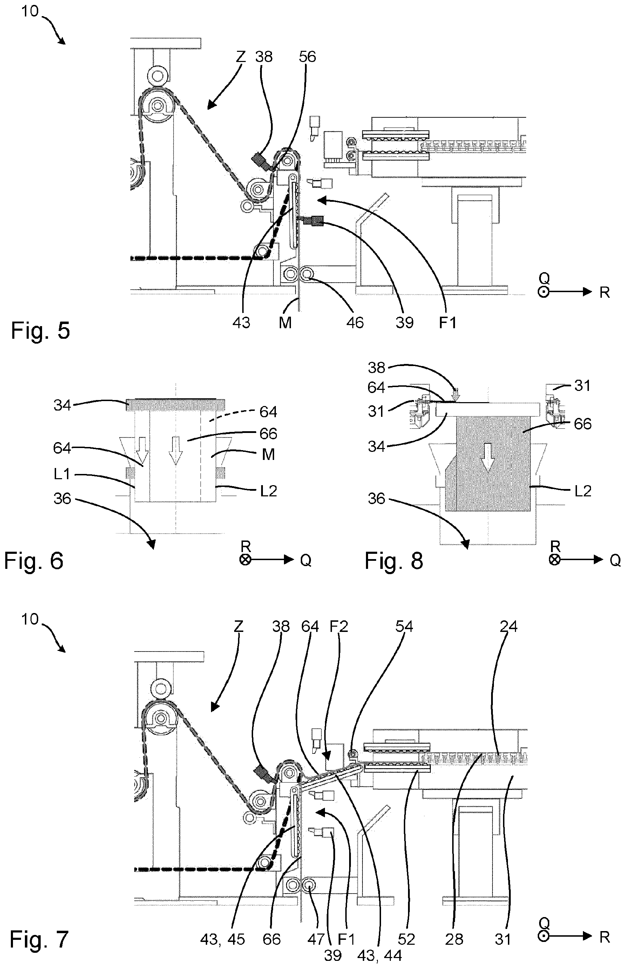

In der zweiten Position des schwenkbaren Förderers 43, die in Figur 7 dargestellt ist, erstreckt sich das nachlaufende Ende des schwenkbaren Förderers 43 zum statischen Förderer 52 hin. Dadurch wird eine zweite Förderstrecke F2 bereitgestellt, die sich vom vorlaufenden Ende des schwenkbaren Förderers 43, also auch anschließend an die Zuführstrecke Z, über den statischen Förderer 52 in die Transportvorrichtung 24, hier also die Einlaufschienen 31 der zweiten Reckanlage 14 erstreckt.

Dadurch, dass die Abschnitte 44, 45 des schwenkbaren Förderers 43 unabhängig voneinander schwenkbar sind, kann für einen Streifen (66) der Materialbahn M in Querrichtung Q die erste Förderstrecke F1 bereitgestellt werden und für einen anderen Streifen (64) der Materialbahn M entlang der Querrichtung Q bereits die zweite Förderstrecke F2, wenn der entsprechende Abschnitt 44 sich in der zweiten Position befindet.

Der Materialspeicher 36 ist nachlaufend zum schwenkbaren Förderer 43 angeordnet, zumindest wenn der schwenkbare Förderer 43 bzw. die Abschnitte 44, 45 in der ersten Position sind.

Der Materialspeicher 36 weist ein Einzugswerk 46 mit zwei Einzugsrollen 47 auf. Die Einzugsrollen 47 liegen einander gegenüber, wobei eine der Einzugsrollen 47 verfahrbar ist, um die Materialbahn M zu klemmen und zu bewegen.

Nachlaufend zum Einzugswerk 46 weist der Materialspeicher 36 ein Sammelvolumen 50 auf, in dem Material der Materialbahn M gesammelt werden kann. Beispielsweise ist im Sammelvolumen 50 ein Mahlwerk (auch Grinder genannt) angeordnet.

Das Mahlwerk kann die Materialbahn M zerkleinern und die auf diese Weise entstandenen Materialschnipsel können zurück zu einem Extruder befördert werden, um das Material wieder zu verwerten.

Die Abtrenneinheit 37 ist im gezeigten Ausführungsbeispiel am Übergang zwischen der Zuführstrecke Z und der ersten bzw. zweiten Förderstrecke F1, F2 vorgesehen. Die Abtrenneinheit 37 ist somit zum Materialspeicher 36 vorlaufend.

Beispielsweise ist die Abtrenneinheit 37 eine U-förmige Klinge oder ein Messer, das im Randbereich der Materialbahn positioniert ist.

Die erste Schneideinheit 38 kann als sogenannter Querschneider ausgeführt sein und ist beispielsweise in der Zuführstrecke Z, insbesondere im Bereich der nachlaufenden Transportrolle 34 vorgesehen.

Die erste Schneideinheit 38 weist eine Klinge 56 auf, die in Abzugsrichtung R orientiert und in Querrichtung Q bewegbar ist.

Auch die erste Schneideinheit 38 ist somit zum Materialspeicher 36 aber auch zur Fördervorrichtung 32, insbesondere zum schwenkbaren Förderer 43 vorlaufend.

Die zweite Schneideinheit 39 kann als Abschlagsmesser ausgeführt sein und ist dazu ausgebildet, den Streifen 64 der Materialbahn M in Querrichtung Q zu trennen.

Hierzu kann die zweite Schneideinheit 39 eine rotierbare Klinge haben, die mit einer statischen, unterhalb der Materialbahn M vorgesehene Klinge zusammenwirkt, um die Materialbahn M wie eine Schere einzuschneiden.

Die zweite Schneideinheit 39 ist im Bereich der ersten Förderstrecke F1, somit nachlaufend zur nachlaufenden Transportrolle 34 angeordnet. Im gezeigten Ausführungsbeispiel ist die zweite Schneideinheit 39 in Abzugsrichtung R im Bereich des schwenkbaren Förderers 43 vorgesehen, genauer gesagt im Bereich eines Randabschnitts 44 des schwenkbaren Förderers 43.

Beispielsweise befindet sich die zweite Schneideinheit 39 in der nachlaufenden Hälfte des Bereichs des schwenkbaren Förderers 43.

Die dritte Schneideinheit 40 ist im Bereich der zweiten Förderstrecke F2 vorgesehen. Die dritte Schneideinheit 40 kann eine Klinge 58 aufweisen, die in Querrichtung Q über die gesamte Breite der Förderstrecke F2 bewegbar ist, um die Materialbahn M in Querrichtung Q vollständig durchzuschneiden.

Die dritte Schneideinheit 40 befindet sich beispielsweise in der vorlaufenden Hälfte des schwenkbaren Förderers 43, wenn sich dieser in der zweiten Position befindet.

In den Figuren 3 bis 10 wird das erfindungsgemäße Verfahren zum Einführen einer Materialbahn von der ersten Reckanlage 12 in die zweite Reckanlage 14 während verschiedener Schritte dargestellt. Dabei ist jeweils in den Figuren 3, 5, 7 und 9 die Anlage 10 mit der Einführeinrichtung 16 in einer Seitenansicht ähnlich der Figur 1 dargestellt.

In den Figuren 4, 6, 8 und 10 ist eine Ansicht der Materialbahn M in Abzugsrichtung R im Bereich des Materialspeichers 36 dargestellt. Die Abzugsrichtung R verläuft dabei senkrecht zur Zeichenebene.

Zu Beginn des Verfahrens wird die Materialbahn M durch die erste Reckanlage 12 mittels eines Einführmittels 22, im gezeigten Ausführungsbeispiel eine Einzugskette, durch die erste Reckanlage 12 geführt. Hierzu ist die Materialbahn M mittels einer Einführhilfe, beispielsweise ein Seil, mit dem Einzugsmittel 22 verbunden.

Dabei wird am in Abzugsrichtung R vorderen Ende der Materialbahn M ein Loch gestochen, durch das die Einführhilfe, also das Seil, hindurchgezogen wird. Die Einführhilfe wird anschließend mit dem Einzugsmittel 22 verbunden.

Die Materialbahn M durchläuft dann, durch das Einzugsmittel 22 gezogen, die erste Reckanlage 12 und auch teilweise die Einführeinrichtung 16, da das Einzugsmittel 22 parallel zur Zuführstrecke Z der Einführeinrichtung 16 geführt ist.

Auf diese Weise wird die Materialbahn M durch die Einführeinrichtung 16 von der ersten Reckanlage 12 empfangen.

Zu Beginn befindet sich der schwenkbare Förderer 43 vollständig in seiner ersten Position, d. h. er steht senkrecht.

Am Übergang von der Zuführstrecke Z zur ersten Förderstrecke F1 wird die Einführhilfe von der Materialbahn M getrennt. Hierzu wird die Abtrenneinheit 37 aktiviert, im gezeigten Ausführungsbeispiel auf die Materialbahn M zu bewegt.

Dadurch wird die Einzugshilfe, also das Seil, an die U-förmige Klinge der Abtrenneinheit 37 geführt, sodass die Einführhilfe durchschnitten wird. Dadurch wird die Materialbahn M vom Einzugsmittel 22, also der Einzugskette, getrennt.

Alternativ ist es denkbar, dass die Abtrenneinheit 37 die Materialbahn M entlang ihrer gesamten Breite hinter der Stelle, an der die Einführhilfe angebracht ist, abtrennt. Auch dadurch wird die Materialbahn M vom Einzugsmittel 22, also der Einzugskette, gelöst.

Das am Einzugsmittel 22 verbleibende Teilstück der Einführhilfe wird mitsamt dem Einzugsmittel 22 zurück in die erste Reckanlage 12 geführt. Das Einzugsmittel 22 kann separat von den Rollen 18 der ersten Reckanlage 12 gestoppt oder verlangsamt werden, um das Teilstück der Einführhilfe, also das übrig gebliebene Seilstück, zu entfernen.

Gleichzeitig läuft die Materialbahn M entlang der ersten Förderstrecke F1, d. h. entlang des schwenkbaren Förderers 43, in den Materialspeicher 36.

In Figur 4 ist zu erkennen, dass die Materialbahn M entlang ihrer gesamten Breite ungeteilt ist und vollständig in den Materialspeicher 36 gefördert wird.

Sobald die vom Einzugsmittel 22 getrennte Materialbahn M den Materialspeicher 36 erreicht, schließt das Einzugswerk 46, beispielsweise dadurch, dass die Einzugsrollen 47 aufeinander zu bewegt werden und die Materialbahn M greifen (vgl. Figur 5).

Mittels der Einzugsrollen 47 des Einzugswerks 46 und/oder der nachlaufenden Transportrolle 34 wird die gewünschte Zugspannung in Abzugsrichtung R auf die Materialbahn M aufgebracht.

Außerdem wird die Position einer der Randabschnitte 44 des schwenkbaren Förderers 43 in Querrichtung Q verändert, um den schwenkbaren Förderer 43 unterhalb der Längskante L1 der Materialbahn M in Abzugsrichtung R platziert.

Hierzu wird die Lage der ersten Längskante L1 der Materialbahn M in Querrichtung Q mittels eines Kantenmessgeräts 62 gemessen. Das Kantenmessgerät 62 ist zum Beispiel ein Sensor zur Detektion der Lage einer der Längskanten L1, L2 der Materialbahn M.

Ein zweites Kantenmessgerät 62 ist auf der anderen Seite der Materialbahn M vorgesehen, um die Lage der zweiten Längskante L2 zu messen.

Das Kantenmessgerät 62 kann ein Teil der Einführeinrichtung 16 sein und ist beispielsweise in der Zuführstrecke Z vorgesehen. Das Kantenmessgerät 62 kann jedoch auch an einer anderen Stelle in der Zuführstrecke Z oder in der ersten Förderstrecke F1 vorgesehen sein. Denkbar ist auch, dass das Kantenmessgerät 62 ein Kantenmessgerät der ersten Reckanlage 12 ist.

Nun wird, wie in Figur 5 zu sehen, die erste Schneideinheit 38 betätigt und auf die Materialbahn M zu gefahren. Dabei schneidet die Klinge 56 der ersten Schneideinheit 38 in die Materialbahn M ein und erzeugt dadurch einen Schnitt in Abzugsrichtung R.

Dadurch wird die Materialbahn M, wie in Figur 6 zu sehen, in Abzugsrichtung R in einen Führungsstreifen 64 und einen Hauptstreifen 66 geteilt. Der Führungsstreifen 64 hat beispielsweise eine Breite in Querrichtung von 100 bis 300 mm, insbesondere 200 mm, d.h. dass die Klinge 56 der ersten Schneideinheit 38 in diesem Abstand von der ersten Längskante L1 in die Materialbahn M einschneidet.

Sowohl der Führungsstreifen 64 als auch der Hauptstreifen 66 werden zunächst in den Materialspeicher 36 gefördert.

Dann wird, wie in Figur 7 dargestellt, der Führungstreifen 64 mithilfe der zweiten Schneideeinheit 39 in Querrichtung Q abgeschnitten. Beispielsweise wird hierfür die zweite Schneideinheit 39 in Querrichtung Q von einer Position außerhalb der Lage der Materialbahn M bis zur Position der Klinge 56 der ersten Schneideinheit 38 verfahren.

Denkbar ist ebenfalls, dass die zweite Schneideinheit 39 als Abschlagseinheit mit einer vorbestimmten Breite ausgebildet ist.

Sobald der Führungsstreifen 64 durch die zweite Schneideinheit 39 getrennt wurde, wird der entsprechende Randabschnitt 44 des schwenkbaren Förderers 43, der sich unterhalb des Führungsstreifens 64 befindet, in die zweite Position verfahren.

Der abgetrennte Führungsstreifen 64 wird dann entlang der zweiten Förderstrecke F2 zum statischen Förderer 52 gefördert.

Um den Übergang von schwenkbaren Förderer 43 zum statischen Förderer 52 zu erleichtern, kann die Randanpresswalze 54 geschlossen werden, um den Führungsstreifen 64 zum statischen Förderer 52 zu fördern.

Mittels des statischen Förderers 52 wird der Führungsstreifen 64 dann an die zweite Reckanlage 14 übergeben, genauer gesagt an diejenige Einlaufschiene 31, die der ersten Längskante L1 der Materialbahn M zugeordnet ist.

Zuvor wurde die Position der entsprechenden Einlaufschiene 31 an die Position der ersten Längskante L1 bzw. des Führungsstreifens 64 angepasst. Hierzu wurde die entsprechende Einlaufschiene 31 in Querrichtung Q bewegt.

Mittels des statischen Förderers 52 wird die Außenkante des Führungsstreifens 64 in die Einlaufschiene 31 eingeführt und dort befestigt bzw. eingekluppt, d. h. von den Kluppeneinheiten 28 gegriffen.

Die Außenkante des Führungsstreifens ist dabei diejenige Kante, die vom Hauptstreifen 66 bzw. der Mitte der Materialbahn M abgewandt ist.

Der Führungsstreifen 64 ist somit in die zweite Reckanlage 14 eingeführt und wird nun von der Transportvorrichtung 24 der zweiten Reckanlage 14 weiter befördert.

Der Hauptstreifen 66 hingegen, läuft, wie in Figur 8 zu sehen, weiterhin in den Materialspeicher 36. Gut zu erkennen ist die Stelle, an der der Führungsstreifen 64 in Querrichtung durch die zweite Schneideinheit 39 abgetrennt wurde.

Um nun auch den Hauptstreifen 66 der zweiten Reckanlage 14 zuzuführen, wird zunächst der zweite Randabschnitt 44 des schwenkbaren Förderers 43, der nicht den Führungsstreifen 64 unterstützt, unterhalb der zweiten Längskante L2 der Materialbahn M gefahren.

Hierzu werden Messwerte des zweiten Kantenmessgeräts 62 verwendet.

Ebenfalls wird die zweite Einlaufschiene 31, die bisher nicht den Führungsstreifen 64 greift, in die entsprechende Position der zweiten Längskante L2 der Materialbahn M in Querrichtung Q verfahren.

Nun fährt die erste Schneideinheit 38 in Querrichtung in Richtung zur zweiten Längskante L2 der Materialbahn M hin, bis die erste Schneideinheit 38 auch durch die zweite Längskante L2 und somit vollständig durch den Hauptstreifen 66 verfahren wurde.

Dabei wird die Breite des Führungsstreifens 64 immer größer, bis die Breite des Führungsstreifens 64 gleich der Breite der Materialbahn M ist, d.h. der Führungsstreifen 64 der Materialbahn M entspricht.

Kurz bevor, gleichzeitig oder kurz nachdem die erste Schneideinheit 38 den Hauptstreifen 66 vollständig passiert hat, werden sowohl der mittlere Abschnitt 45 als auch der Randabschnitt 44 des schwenkbaren Förderers 43 in die zweite Position verschwenkt.

Dadurch werden nun auch die übrigen Teile der Materialbahn M entlang der zweiten Förderstrecke F2 gefördert.

Auch in dieser Situation kann eine Randanpresswalze 54 an der zweiten Längskante L2 die Übergabe zwischen dem schwenkbaren Förderer 43 und dem statischen Förderer 52 unterstützen.

Anschließend wird die zweite Längskante L2 mittels des statischen Förderers 52 in die zweite Einlaufschiene 31, die der zweiten Längskante L2 zugeordnet ist, eingeführt. Dadurch wird die zweite Längskanten L2 der Materialbahn M an der Transportvorrichtung 24 befestigt, d.h. in die Kluppeneinheiten 28 eingeführt und die Kluppen geschlossen.

Zur Unterstützung des Einführens kann die obere Unterstützungsplatte 53 des statischen Förderers 52 nach unten verfahren, um den jeweiligen Streifen 64, 66 von der Oberseite her zu fördern.

Somit ist nun auch die zweite Längskante L2 der Materialbahn M sicher in der Transportvorrichtung 24 der zweiten Reckanlage 14 befestigt.

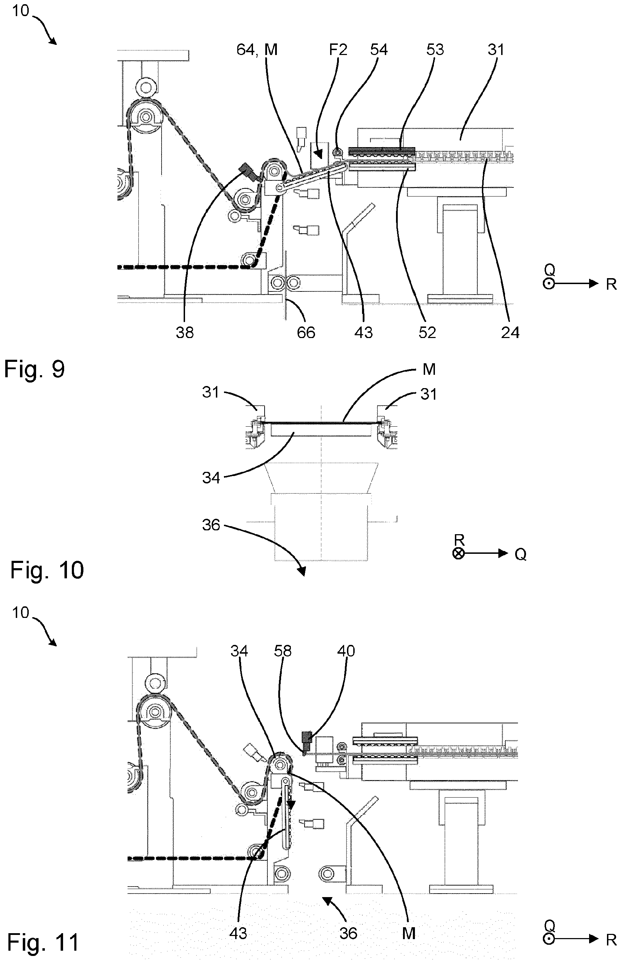

Wie in Figur 9 zu sehen, verläuft die gesamte Materialbahn nun in die zweite Reckanlage 14 und kein Streifen mehr in den Materialspeicher 36.

Die Materialbahn M ist nun vollständig in die zweite Reckanlage 14 eingeführt, und die gesamte Anlage 10 kann nun in Produktion gehen, das heißt beispielsweise eine Geschwindikeits- und Materialausstoßerhöhung. Beispielsweise wird der schwenkbare Förderer 43 nun wieder in seine erste Position verschwenkt.

Bei Betriebsstörungen der zweiten Reckanlage 14 ist es notwendig, die zweite Reckanlage 14 zu stoppen und die Zuführung der Materialbahn M zur zweiten Reckanlage 14 zu unterbrechen.

In diesem Falle wird die gesamte Materialbahn M mittels der dritten Schneideinheit 40 oberhalb des schwenkbaren Förderers 43 vollständig durchtrennt. Beispielsweise durchfährt die Klinge 58 der dritten Schneideinheit 40 die Materialbahn M vollständig. Der Förderer 43 befindet sich in der ersten Position bzw. wird in die erste Position verfahren, sofern er sich noch in der zweiten Position befindet.

Nachdem der Schnitt der dritten Schneideinheit 40 erfolgt, stürzt die Materialbahn M nun nach unten in Richtung zum Materialspeicher 36 und wird von Materialspeicher 36 aufgenommen. Bei diesem Prozess kann der Förderer 43 bei Bedarf den Film unterstützen und in Richtung Materialspeicher 36 fördern.

Das Einzugswerk 46 des Materialspeichers 36 kann dann geschlossen werden, um die Materialbahn M in den Materialspeicher 36 zu fördern und die Materialbahn M auf einer vorbestimmten Zugspannung zu halten.

Die erste Reckanlage 12 kann daher weiter betrieben werden, obwohl die zweite Reckanlage 14 eine Störung hat.

Sobald die zweite Reckanlage 14 wieder betriebsfähig ist, wird die Materialbahn M wie zuvor beschrieben wieder in die zweite Reckanlage 14 eingeführt dabei wird die Abtrenneinheit 37 nicht mehr benötigt, da die Materialbahn M bereits in den Materialspeicher 36 gemäß Figur 4 gefördert wird.

Mittels der Einführeinrichtung 16 ist es somit möglich, vollautomatisiert die Materialbahn M von der ersten Reckanlage 12 zu empfangen und der zweiten Reckanlage 14 zu übergeben.

Auch Betriebsunterbrechungen der zweiten Reckanlage 14 können vollautomatisch abgefangen werden und die Materialbahn bei erneuter Betriebsfähigkeit der zweiten Reckanlage 14 wieder automatisiert der zweiten Reckanlage 14 zugeführt werden.

Durch diese Automatisierung kann der Personalaufwand zum Einführen der Materialbahn M in die zweite Reckanlage 14 stark verringert werden. Zugleich können die erste Reckanlage 12 und die zweite Reckanlage 14 näher aneinander platziert werden, wodurch die Gesamtlänge der Anlage 10 deutlich verringert wird.

In der gezeigten ersten Ausführungsform ist es ebenfalls denkbar, dass zwei Führungsstreifen 64 verwendet werden.

Das Verfahren verläuft im Wesentlichen wie das zuvor beschriebene Verfahren mit einem Führungsstreifen 64. Es sind jedoch zwei erste Schneideinheiten 38 vorgesehen, die an gleicher Position in Abzugsrichtung R aber in Querrichtung Q gegenüberliegenden angeordnet sind. Daher wird die zweite Schneideinheit 39 in den Figuren durch die erste Schneideinheit 38 verdeckt. Entsprechend sind auch zwei zweite Schneideinheiten 39 vorhanden.

Eine der ersten und eine der zweiten Schneideinheiten 38, 39 agieren wie zuvor beschrieben und die zweite erste Schneideinheit 38 trennt an der zweiten Längskanten L2 der Materialbahn M einen zweiten Führungsstreifen 64 ab. Die Breite des zweiten Führungsstreifens 64 entspricht dabei zum Beispiel der Breite des ersten Führungsstreifens 64. Der zweite Führungsstreifen 64 ist in Figur 6 mittels der gestrichelten Linie angedeutet.

Zwischen dem ersten und dem zweiten Führungsstreifen 64 wird somit wieder ein Hauptstreifen 66 gebildet.

Zur Überführung des zweiten Führungsstreifens 64 wird der entsprechende Randabschnitt 44 des schwenkbaren Förderers 43 unabhängig vom mittleren Abschnitt 45 des schwenkbaren Förderers 43 in die zweite Position verschwenkt, um den zweiten Führungsstreifen 64 an den statischen Förderer 52 zu übergeben. Dies geschieht zum Beispiel gleichzeitig mit dem anderen Randabschnitt 44.

Dieser fördert den zweiten Führungsstreifen 64 zur zweiten, der zweiten Längskante L2 zugeordneten Einlaufschiene 31, sodass die Außenkante des zweiten Führungsstreifens 64 in der Einlaufschiene 31 befestigt, insbesondere eingekluppt wird.

Dies geschieht insbesondere gleichzeitig zum Abtrennen und Einkluppen des ersten Führungsstreifens 64, sodass zunächst lediglich die beiden Führungsstreifen 64 in der zweiten Reckanlage 14 eingeführt sind.

Der Hauptstreifen 66 wird zunächst weiterhin in den Materialspeicher 36 gefördert.

Im Unterschied zur Situation mit nur einer ersten Schneideinheit 38, werden die zwei ersten Schneideinheiten 38 in Querrichtung Q aufeinander zu Verfahren, bis sie aneinander angrenzen. Dann werden die Klingen 56 der ersten Schneideinheiten 38 aus der Materialbahn M zurückgezogen, sodass sich die beiden Führungsstreifen 64 und gegebenenfalls ein Rest des Hauptstreifen 66 wieder zu einer zusammenhängen Materialbahn M vereinen.

Da die Außenkante der Führungsstreifen 64 und somit beide Längskanten L1, L2 der Materialbahn M bereits in die zweite Reckanlage 14 eingeführt sind, wird nun auch die gesamte Materialbahn M, d. h. auch der Teil, der zuvor der Hauptstreifen 66 war, in die zweite Reckanlage 14 eingezogen. Hierzu wird zur Unterstützung der mittlere Abschnitt 45 des schwenkbaren Förderers 43 ebenfalls in die zweite Position verfahren.

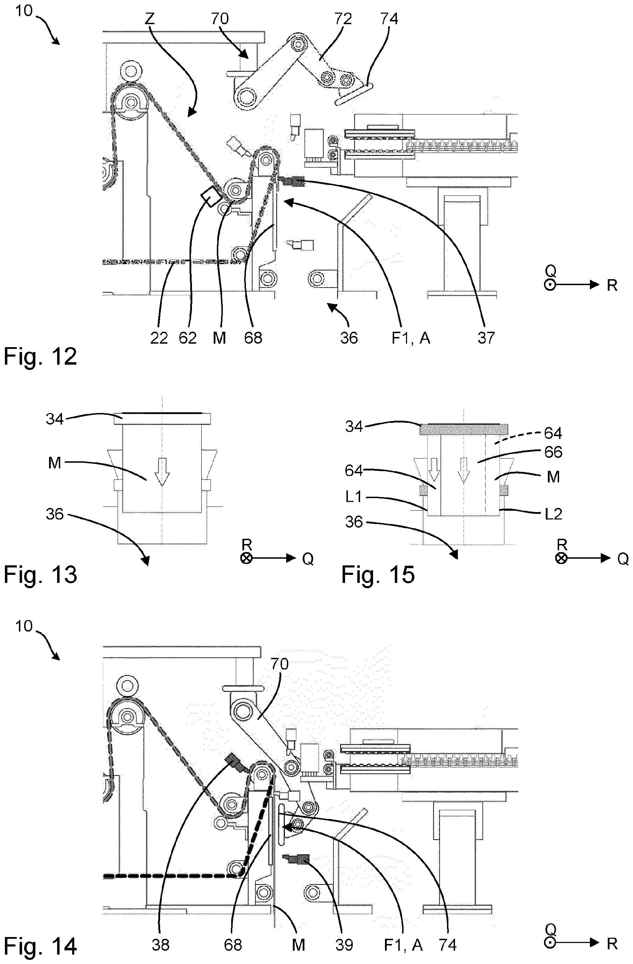

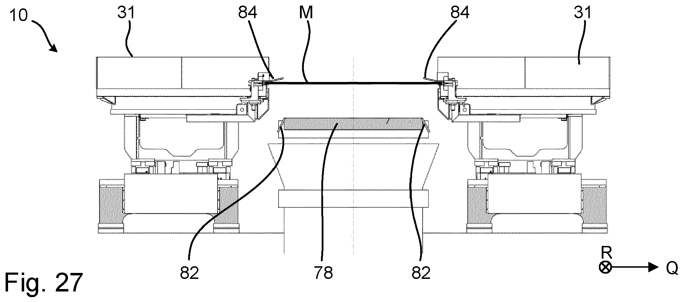

In den Figuren 12 bis 27 sind weitere Ausführungsformen der Erfindung dargestellt, die im Wesentlichen der zuvor beschriebenen Ausführungsform entsprechen. Daher wird im Folgenden lediglich auf die Unterschiede eingegangen und gleiche und funktionsgleiche Teile sind mit denselben Bezugszeichen versehen.

In Figur 12 ist die Anlage 10 mit einer Einführeinrichtung 16 gemäß einer zweiten Ausführungsform der Erfindung dargestellt. Die Darstellung der Figur 12 entspricht in etwa derjenigen der Figur 3.

Im Unterschied zur ersten Ausführungsform weist die Einführeinrichtung 16 der zweiten Ausführungsform keinen schwenkbaren Förderer 43 auf.

Anstelle des schwenkbaren Förderers 43 kann eine Stütze 68 für die Materialbahn M vorgesehen sein.

Die Stütze 68 ist ähnlich wie der schwenkbare Förderer 43 schwenkbar am Gerüst 41 befestigt und kann eine erste und eine zweite Position einnehmen.

Alternativ oder zusätzlich kann die Stütze 68 nur höhenverstellbar sein.

Die Stütze 68 kann dabei - wie der schwenkbare Förderer 43 - in Querrichtung Q mehrere Abschnitte aufweisen, die unabhängig voneinander agieren. Insbesondere weist die Stütze 68 einen mittleren Abschnitt auf.

In einer ersten Position liegt die Stütze 68 senkrecht am Gerüst 41 an, sodass die Materialbahn M von der nachlaufenden Transportrolle 34 in den Materialspeicher 36 gefördert werden kann. Dies entspricht in etwa der ersten Förderstrecke F1 der ersten Ausführungsform.

In der zweiten Position ist das nachlaufende Ende der Stütze 68 nach oben verschwenkt in Richtung des statischen Förderers 52.

In der zweiten Position stellt somit die Stütze 68 eine Förderstrecke von der nachlaufenden Transportrolle 34 zum statischen Förderer 52 bereit, die etwa der zweiten Förderstrecke F2 der ersten Ausführungsform entspricht.

In der zweiten Ausführungsform weist die Einführeinrichtung 16 einen Industrieroboter 70 mit einem Manipulator 72 und einem Saugkopf oder Greifer 74 als Effektor auf. Der Industrieroboter 70 ist Teil der Fördervorrichtung 32.

Der Industrieroboter 70 ist beispielsweise am Gerüst 41 befestigt. Im in Figur 12 gezeigten Ausführungsbeispiel ist der Industrieroboter 70 an der ersten Reckanlage 12 befestigt.

Die Einführeinrichtung 16 hat zudem eine Aufnahmestrecke A. Die Aufnahmestrecke A ist beispielsweise ein Teil der ersten Förderstrecke F1, wenn die Stütze 68 in ihrer ersten Position ist. Die Aufnahmestrecke A erstreckt sich beispielsweise senkrecht.

Denkbar ist ebenfalls, dass die Aufnahmestrecke A ein Abschnitt der Zuführstrecke Z ist.

In der zweiten Ausführungsform befindet sich die zweite Schneideinheit 37 im Bereich der Aufnahmestrecke A, insbesondere in der nachlaufenden Hälfte des Bereichs der Aufnahmestrecke A.

Die dritte Schneideinheit 40 befindet sich in der vorlaufenden Hälfte des Bereichs der Stütze 68.

Um die Materialbahn M in die zweite Reckanlage 14 einzuführen, wird - wie zur ersten Ausführungsform beschrieben - zunächst mittels der Abtrenneinheit 37 die Materialbahn M vom Einzugsmittel 22 getrennt (vgl. Fig. 12) .

Die gesamte Materialbahn M läuft dann entlang der Stütze 68 in der ersten Position senkrecht nach unten in den Materialspeicher 36 (vgl. Fig. 13).

Das Einzugswerk 46 bzw. die Einzugsrollen 47 greifen die Materialbahn M und fördert die Materialbahn M in das Sammelvolumen. Zudem wird die Zugspannung der Materialbahn eingestellt.

Anschließend fährt, wie in Figur 14 zu sehen, der Industrieroboter 70 mit dem Saugkopf 74 an die Aufnahmestrecke A, wobei die Ausrichtung des Saugkopfs 74 an der Längskanten L1 der Materialbahn M anhand der Messwerte des Kantenmessgeräts 62 erfolgt.

Zu diesem Zeitpunkt kann auch die eine oder beide Einlaufschienen 31 in die entsprechende Position in Querrichtung Q fahren.

Die erste Schneideinheit 38 wird nun betätigt, sodass wie zur ersten Ausführungsform beschrieben, die Materialbahn M in einen Führungsstreifen 64 und einen Hauptstreifen 66 geteilt wird (vgl. Fig. 15).

Der Saugkopf 74 wird nun vom Manipulator 72 auf den Führungsstreifen 64 gefahren und nimmt diesen auf, genauer gesagt saugt er den Führungsstreifen 64 an.

Zur Aufnahme des Führungsstreifens 64 kann der Saugkopf 74 die Materialbahn M gegen die Stütze 68 drücken.

Der Saugkopf 74 kann dabei oder danach noch ein Stück in Richtung zum Einzugswerk 46 fahren, um die Bewegung der Materialbahn M aufzunehmen.

Gleichzeitig oder in unmittelbarer Folge wird der Führungsstreifen nachlaufend zum Saugkopf 74 mittels der zweiten Schneideeinheit 39 abgetrennt.

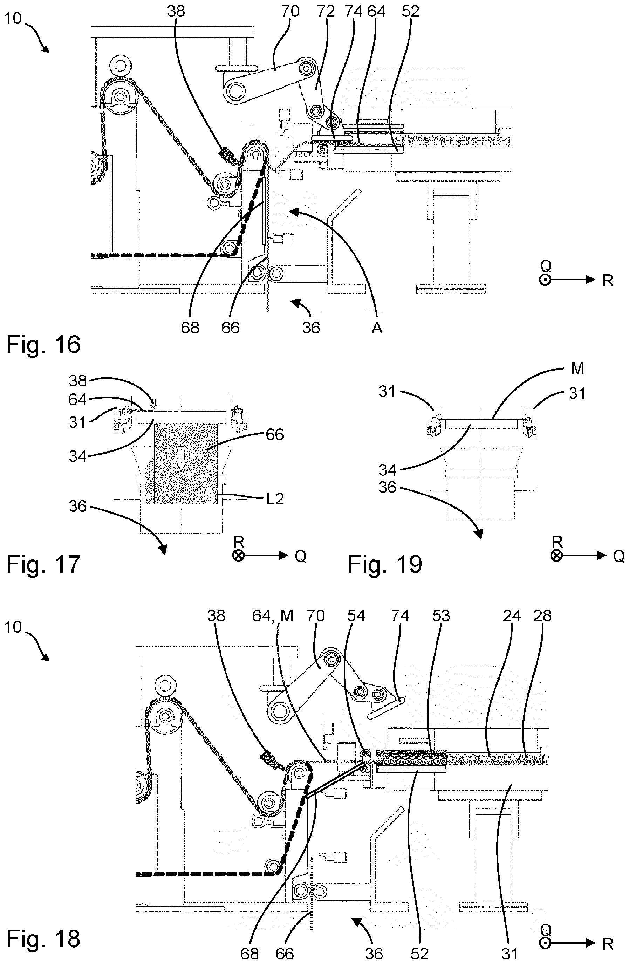

Wie in Figur 16 zu sehen, bewegt der Industrieroboter 70 den Führungsstreifen zur zweiten Reckanlage 14 hin und platziert den Führungsstreifen 64 auf dem statischen Förderer 52. Dann gibt der Saugkopf 74 den Führungsstreifen 64 frei und entfernt sich vom Führungssteifen 64.

Der Führungsstreifen 64 wird dann mit einer Außenkante, wie zur ersten Ausführungsform beschrieben, durch den statischen Förderer 52 in die Einlaufschiene 31 eingeführt und an der Transportvorrichtung 24 befestigt.

Alternativ ist es denkbar, dass die Einführeinrichtung 16 keinen statischen Förderer 52 aufweist, sondern der Industrieroboter 70 den Führungsstreifen 64 direkt in die Einlaufschiene 31 der zweiten Reckanlage 14 einführt.

Während der Führungsstreifen 64 vom Industrieroboter 70 bewegt wird, wird der Hauptstreifen 66, wie in Figur 17 zu sehen, weiterhin in den Materialspeicher 36 gefördert.

Anschließend wird die zweite Einlaufschiene 31 der zweiten Reckanlage 14, sofern noch nicht geschehen, ebenfalls anhand der Daten des Kantenmessgeräts 62 an der anderen Längskanten L2 der Materialbahn M in die der zweiten Längskanten L2 entsprechende Position in Querrichtung Q gefahren.

Die erste Schneideinheit 38 fährt nun, wie zur ersten Ausführungsform beschrieben, vollständig durch den Hauptstreifen 66, um den Führungsstreifen 64 zu vergrößern.

Außerdem schwenkt die Stütze 68 in die zweite Position, um den nun größer werdenden Führungsstreifen 64 zu stützen und zum statischen Förderer 52 bzw. direkt in die Einlaufschiene 31 zu führen (vgl. Figur 18).

Wie in Figur 19 zu sehen, verläuft nun die gesamte Materialbahn in die beiden Einlaufschienen 31 und nicht mehr in den Materialspeicher 36.

Die Materialbahn M ist nun sicher eingeführt, sodass die zweite Reckanlage 14 die Produktion aufnehmen kann.

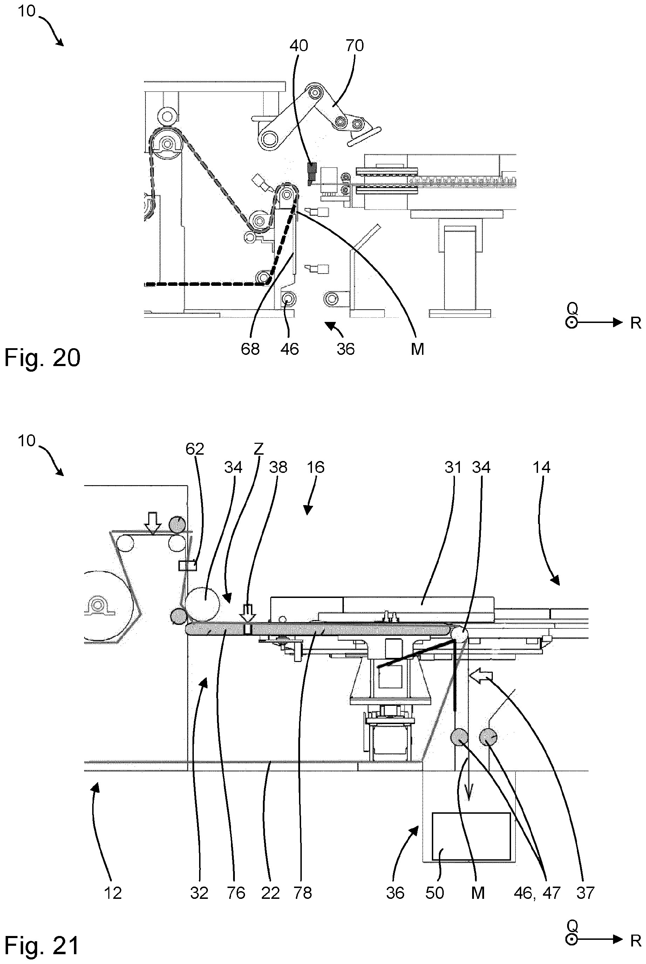

In Figur 20 ist nahezu identisch zur Figur 11 die Situation dargestellt, in der bei einer Betriebsunterbrechung der zweiten Reckanlage 14 die Materialbahn vollständig abgetrennt werden muss. Hierzu wird, wie schon zur ersten Ausführungsform beschrieben, die Materialbahn M mittels der dritten Schneideinheit 40 oberhalb des Einzugswerks 46 getrennt, sodass die Materialbahn M ins Einzugswerk 46 fällt.

Auch ist es möglich, gemäß dem Prinzip der zweiten Ausführungsform zwei Führungsstreifen 64 zu verwenden. In diesem Falle sind zwei erste Schneideinheiten 38 und zwei zweite Schneideeinheiten 39 vorgesehen, die wie zur ersten Ausführungsform beschrieben, betrieben werden.

Weiterhin ist zusätzlich zum ersten Industrieroboter 70 ein zweiter Industrieroboter 70 an der zweiten Längskanten L2 der Materialbahn M vorgesehen, der den zweiten Führungsstreifen 64 (in Fig. 15 mit gestrichelter Linie angedeutet) aufnimmt und zum statischen Förderer 52 bzw. zur entsprechenden Einlaufschiene 31 bewegt. Dies geschieht analog wie die zuvor beschriebene Bewegung des ersten Industrieroboters 70.

Anschließend verfahren die beiden ersten Schneideinheiten 38 - ebenfalls wie zuvor beschrieben - aufeinander zu und werden aus der Materialbahn M entfernt. Dabei kann die Stütze 68 auch in dieser Alternative in die zweite Position gefahren werden, um die Materialbahn M zu stützen.

Sofern zwei Industrieroboter 70 verwendet werden, ist lediglich der mittlere Abschnitt der Stütze 68 notwendig.

Die Figuren 21 bis 27 zeigen eine dritte Ausführungsform der erfindungsgemäßen Anlage 10 mit einer dritte Ausführungsform der erfindungsgemäßen Einführeinrichtung 16.

In der dritten Ausführungsform weist die Fördervorrichtung 32 keinen schwenkbaren Förderer 43 oder schwenkbare Stütze 68 auf.

Die Fördervorrichtung 32 hat einen ersten Förderer 76 und einen zweiten Förderer 78, der zum ersten Förderer 76 nachlaufend ist.

Der erste Förderer 76 schließt nahezu direkt an die erste Reckanlage 12 an und stellt die Zuführstrecke Z bereit.

Der erste und der zweite Förderer 76, 78 sind beispielsweise Förderbänder, insbesondere Saugförderbänder, oder mit Rollen versehene Unterstützungsplatten.

Die erste Schneideinheit 38 verläuft zwischen dem ersten und zweiten Förderer 76, 78 und der Materialspeicher 36 ist nachlaufend zum zweiten Förderer 78 angeordnet.

Die nachlaufenden Transportrolle 34 ist nachlaufend zum zweiten Förderer 78 angeordnet, ebenso wie die Abtrenneinheit 37.

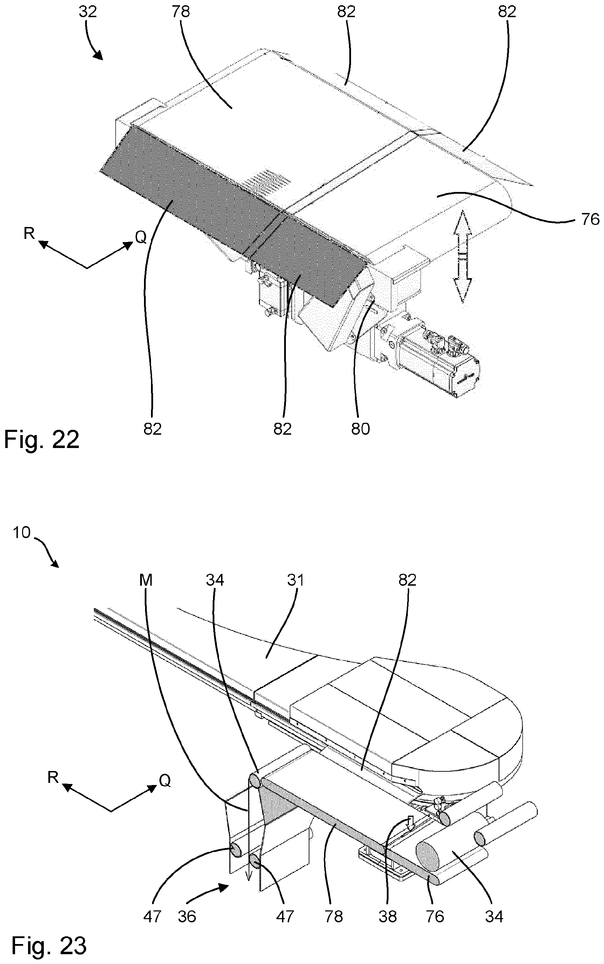

In Figur 22 sind der erste Förderer 76 und der zweite Förderer 78 in einer perspektivischen Darstellung dargestellt.

Gut zu erkennen ist, dass beide Förderer mittels eines gemeinsamen Mechanismus 80 gemeinsam in der Höhe verstellbar sind.

Ebenfalls ist zu erkennen, dass die Förderer 76, 78 an ihren Längsseiten jeweils einen schwenkbaren Unterstützungsflügel 82 aufweisen. Die Schwenkachsen der Unterstützungsflügel 82 verlaufen in Abzugsrichtung R.

Die Unterstützungsflügel 82 können nach oben geschwenkt werden und verbreitern so die Auflagefläche der Förderer 76, 78 in Querrichtung Q, um die Auflagefläche an die Breite der Materialbahn M anpassen zu können.

Die Fördervorrichtung 32, d. h. der erste Förderer 76 und der zweite Förderer 78, sind in Querrichtung Q teilweise zwischen den beiden Einlaufschienen 31 der zweiten Reckanlage 14 angeordnet. Insbesondere ist der zweite Förderer 78 zwischen den Einlaufschienen 31 angeordnet, wie in Figur 23 am Beispiel einer der Einlaufschienen 31 dargestellt ist.

Denkbar ist, dass die Einlaufschienen 31 jeweils eine obere Führungsplatte 84 aufweisen, die oberhalb eines Einführspaltes vorgesehen sind.

Die Führungsplatten 84 sind beispielsweise vertikal verfahrbar und weisen angetriebene Führungsrollen auf, die schräg zur Abzugsrichtung R und zur Querrichtung Q ausgerichtet sind. Dadurch kann die Materialbahn aktiv in die Kluppeneinheiten 28 eingeführt werden.

In Einführeinrichtung 16 der dritten Ausführungsform ist keine zweite Schneideinheit 39 notwendig, da ihre Funktion von der ersten Schneideinheit 38 wahrgenommen wird.

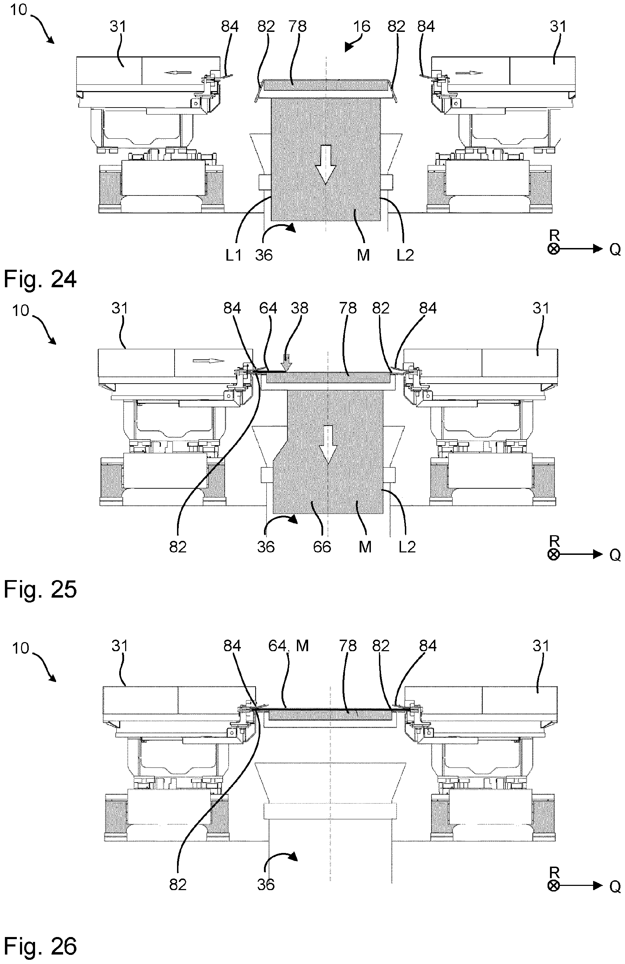

In den Figuren 24 bis 27 ist eine Schnittansicht durch die Anlage 10 im Bereich der Einlaufschiene 31 nachlaufend zur Fördervorrichtung 32 aber entgegen der Abzugsrichtung dargestellt, um das Verfahren zum Einführen der Materialbahn M in die zweite Reckanlage in verschiedenen Situationen zu zeigen.

Zum Einführen der Materialbahn M in die zweite Reckanlage 14 gemäß der dritten Ausführungsform fahren zunächst die Förderer 76, 78 in die Arbeitsposition auf Höhe der Materialbahn M bzw. auf Höhe der Transportvorrichtung 24 der zweiten Reckanlage 14.

In Querrichtung Q sind die Einlaufschienen 31 auf maximale Breite auseinandergefahren.

Mittels des Einzugsmittels 22 wird, ähnlich wie zur ersten Ausführungsform beschrieben, die Materialbahn M durch die erste Reckanlage 12 und anschließend bis zur nachlaufenden Transportrolle 34 durch die Einführeinrichtung 16 gezogen, d. h. auf den ersten und zweiten Förderer 76, 78.

Anschließend wird die Einführhilfe 60 durch die Abtrenneinheit 37 getrennt und die Materialbahn M wird in den Materialspeicher 36 gefördert. Dies geschieht beispielsweise bereits durch die Förderer 76, 78.

Das Einzugswerk 46 kann dann geschlossen werden.

Nun kann mittels der nachlaufenden Transportrolle 34, dem ersten Förderer 76, dem zweiten Förderer 78 und/oder im Einzugswerk 46 die gewünschte Zugspannung auf die Materialbahn M aufgebracht werden (vgl. Figur 24).

Außerdem fahren die Unterstützungsflügel 82 der Förderer 76, 78 aus, d. h. sie werden nach oben verschwenkt.

Dabei werden sie soweit verschwenkt, dass sie die Auflagefläche der Förderer 76 insoweit vergrößern, dass die Auflagefläche der mittels der Kantenmessgeräte 62 ermittelten Breite der Materialbahn nicht ganz entspricht, sondern schmaler ist.

Die Breite der Auflagefläche wird dabei kleiner gewählt als die gemessene Breite der Materialbahn M, sodass die Materialbahn M an jeder Seite in Querrichtung Q mit ihren Längskanten L1, L2 um einen Überstand übersteht.

Die beiden Einlaufschienen 31 werden nun in Richtung der Förderer 76, 78 verfahren, bis der Abstand zwischen der Einzugsschiene 31 und dem jeweiligen Unterstützungsflügel 82 kleiner ist als der Überstand der Materialbahn M über die Auflagefläche in Querrichtung Q.

Somit verlaufen die Längskanten L1, L2 der Materialbahn M bereits in der Einlaufschiene 31. Dabei wird mittels der Führungsplatten 84 der Einlaufschienen 31, die sich oberhalb der Aufnahmen der Einlaufschienen in die Mitte erstrecken, verhindert, dass sich die Materialbahn M an den Längskanten L1, L2 aufrichtet (sogenanntes Curling).

Nun wird die erste Schneideinheit 38 von einer der Längskanten L1, L2 ein Stück in die Mitte der Materialbahn M bewegt, sodass ein Führungsstreifen 64 abgetrennt wird.

Gleichzeitig fährt die Einlaufschiene 31 auf der dem Führungsstreifen 64 entsprechenden Seite der Materialbahn weiter nach innen, bis die Außenkante des Führungsstreifens 64 in die Kluppeneinheiten 28 der Einlaufschiene 31 eingreift und somit in der Einlaufschiene 31 befestigt wird (Figur 25).

Die erste Schneideinheit 38 fährt vollständig durch die Materialbahn hindurch, beispielsweise sogar in einer Bewegung. Die zweite Einlaufschiene 31 fährt auf der dem Führungsstreifen 64 entgegengesetzten Seite weiter nach innen, sobald die erste Schneideinheit 38 vollständig durch die Materialbahn M hindurch gefahren ist.

Die Bewegung der zweiten Einlaufschiene 31 erfolgt so weit, bis die zweite Längskante L2 der Materialbahn M in der Einlaufschiene 31 eingesetzt und mittels der Kluppeneinheiten 28 befestigt ist.

Zu diesem Zeitpunkt läuft nun die gesamte Materialbahn in die zweite Reckanlage 14 und nicht mehr in den Materialspeicher 36, wie in Figur 26 zu sehen.

Nun kann die Fördervorrichtung 32 nach unten bewegt werden, um unnötige Reibung mit der Materialbahn M zu verhindern.

Die Materialbahn M ist somit vollständig in die zweite Reckanlage 14 eingeführt, sodass die Anlage 10 nun in Produktion gehen kann.

Um in der dritten Ausführungsform bei einer Fehlfunktion der zweiten Reckanlage 14 die Materialbahn M wieder in den Materialspeicher 36 zu fördern, wird zunächst die Fördervorrichtung 32 wieder nach oben verfahren, bis sie die Materialbahn M berührt. Dann wird die Materialbahn M mittels der ersten Schneideinheit 38 vollständig durchschnitten und die Einlaufschienen 31 fahren nach außen bei geöffneten Kluppeneinheiten 28 bis die Materialbahn M nicht mehr in den Einlaufschienen 31 läuft.

Sodann wird die Materialbahn M durch die Förderer 76, 78 in den Materialspeicher 36 gefördert.

Auch in der dritten Ausführungsform können zwei Führungsstreifen 64 zum Einsatz kommen. Hierzu werden ebenfalls zwei erste Schneideinheiten 38 verwendet, die wie zuvor beschrieben zwei Führungsstreifen 64 abtrennen. Die Bewegung der beiden Einlaufschienen 31 zum Einkluppen der Außenränder der Führungsstreifen 64 erfolgt dann zum Beispiel gleichzeitig.

Nachfolgend werden nochmals einige Punkte der erfindungsgemäßen Einführungseinrichtung 1 gesondert beschrieben.

Ein Ausführungsbeispiel der Einführeinrichtung 1, welches insbesondere mit dem des Anspruchs 1 oder 2 kombiniert werden kann, umfasst die folgenden Merkmale:
- Die Einführeinrichtung 16 weist wenigstens eine Transportrolle 34, insbesondere ein Gerüst 41 mit zwei Transportrollen 34 auf, die dazu ausgebildet sind, die Materialbahn M entlang einer Zuführstrecke Z zu führen, wobei das Gerüst 41 dazu ausgebildet ist, ein Einzugsmittel 22 der ersten Reckanlage 12 zumindest teilweise parallel zur Zuführstrecke Z zu führen.

Ein Ausführungsbeispiel der Einführeinrichtung 1, welches insbesondere mit dem der Ansprüche 1 bis 3 kombiniert werden kann, umfasst die folgenden Merkmale:
- die erste Schneideinheit 38 oder die zwei ersten Schneideinheiten 38 ist bzw. sind zur Fördervorrichtung 32 teilweise, insbesondere vollständig vorlaufend.

Ein Ausführungsbeispiel der Einführeinrichtung 1, welches insbesondere mit dem der Ansprüche 1 bis 3 kombiniert werden kann, umfasst folgende Merkmale:
- die Einführeinrichtung 16 weist einen Materialspeicher 36 zur Aufnahme von überschüssigem Material der Materialbahn M auf, insbesondere wobei der Materialspeicher 36 ein Einzugswerk 46 mit wenigstens zwei Einzugsrollen 47 aufweist.

Ein Ausführungsbeispiel der Einführeinrichtung 1, welches insbesondere mit dem der Ansprüche 1 bis 3 kombiniert werden kann, umfasst folgende Merkmale:
- die Einführeinrichtung 16 weist wenigstens einen Sensor zur Detektion der Lage der Kante L1, L2 der Materialbahn M in Querrichtung Q auf.

Ein Ausführungsbeispiel der Einführeinrichtung 1, welches insbesondere mit dem des Anspruches 7 kombiniert werden kann, umfasst die folgenden Merkmale:
- eine Stütze 68, die für die Materialbahn M vorgesehen ist, wobei die Stütze 68 schwenkbar und/oder höhenverstellbar ist und in einer Stellung eine Förderstrecke F1 von der Aufnahmestrecke A zur Transportvorrichtung 24 der zweiten Reckanlage 14 und/oder zum statischen Förderer 52 bereitstellt.

Ein Ausführungsbeispiel der Einführeinrichtung 1, welches insbesondere mit dem des Anspruches 10 kombiniert werden kann, umfasst die folgenden Merkmale:
- die erste Reckanlage 12 hat eine Transportstrecke T, die an eine Zuführstrecke Z der Fördervorrichtung 32 anschließt.

Ein Ausführungsbeispiel des Verfahrens, welches insbesondere mit dem des Anspruchs 12 kombiniert werden kann, umfasst den folgenden weiteren Schritt:
- Trennen des Beginns der Materialbahn M von einem Einzugsmittel 22 für die erste Reckanlage 12 durch eine Abtrenneinheit 37 der Einführeinrichtung 16.

Ein Ausführungsbeispiel des Verfahrens, welches insbesondere mit dem der Ansprüche 12 bis 15 kombiniert werden kann, umfasst die folgenden weiteren Schritte:
- Durchtrennen der gesamten Materialbahn M durch die dritte Schneideinheit 40, und
- Fördern der Materialbahn M zu dem Materialspeicher 36 der Einführeinrichtung 16.

Die verschiedenen Merkmale der verschiedenen Ausführungsformen können miteinander kombiniert werden.

## Patentansprüche

1. Einführeinrichtung zum automatischen Einführen einer Materialbahn (M) von einer ersten Reckanlage (12) in eine zweite Reckanlage (14), wobei die Einführeinrichtung (16) eine Fördervorrichtung (32) aufweist, die dazu ausgebildet ist, zumindest einen Streifen der Materialbahn (M), die aus der ersten Reckanlage (12) austritt, an eine Transportvorrichtung (24) der zweiten Reckanlage (14) zu übergeben.

2. Einführeinrichtung nach Anspruch 1, **dadurch gekennzeichnet, dass** die Einführeinrichtung (16) eine Abtrenneinheit (37) zum Trennen der Materialbahn (M) von einem Einzugsmittel (22) für die erste Reckanlage (12) aufweist.

3. Einführeinrichtung nach Anspruch 1 oder 2, **dadurch gekennzeichnet, dass** die Einführeinrichtung (16) eine erste Schneideinheit (38) aufweist, die dazu ausgebildet ist, die Materialbahn (M) in Abzugsrichtung (R) in einen Führungsstreifen (64) und einen Hauptstreifen (66) zu teilen, oder die Einführeinrichtung (16) zwei erste Schneideinheiten (38) aufweist, die dazu ausgebildet sind, die Materialbahn (M) in Abzugsrichtung (R) in zwei Führungsstreifen (64) und einen zwischen den Führungsstreifen (64) liegenden Hauptstreifen (66) zu teilen,
wobei die Fördervorrichtung (32) dazu ausgebildet ist, den einen Führungsstreifen (64) oder die zwei Führungsstreifen (64) der Transportvorrichtung (24) der zweiten Reckanlage (14) zu übergeben.

4. Einführeinrichtung nach einem der vorhergehenden Ansprüche, **dadurch gekennzeichnet, dass** die Fördervorrichtung (32) einen schwenkbaren Förderer (43) aufweist, der zwischen einer ersten Position und einer zweiten Position bewegbar ist, wobei der schwenkbare Förderer (43) in der ersten Position eine erste Förderstrecke (F1), insbesondere zum Materialspeicher (36) hin, und in einer zweiten Position eine zweite Förderstrecke (F2) zur Transportvorrichtung (24) der zweiten Reckanlage (14) hin bereitstellt,
insbesondere wobei der schwenkbare Förderer (43) in Querrichtung (Q) wenigstens zwei, insbesondere drei Abschnitte (44, 45) aufweist, die unabhängig voneinander schwenkbar sind, insbesondere wobei beide äußeren Abschnitte (44) zusätzlich in Querrichtung (Q) bewegbar sind, und/oder die Fördervorrichtung (32) einen statischen Förderer (52) aufweist, insbesondere ein Förderband oder eine mit Rollen versehene Unterstützungsplatte, der zum schwenkbaren Förderer (43) nachlaufend ist und der in der zweiten Förderstrecke (F2) zur Transportvorrichtung (24) der zweiten Reckanlage (14) hin angeordnet ist.

5. Einführeinrichtung nach Anspruch 4, **dadurch gekennzeichnet, dass** die Fördervorrichtung (32) wenigstens eine Randanpresswalze (54) aufweist, die am nachlaufenden Ende des schwenkbaren Förderers (43) angeordnet ist, wenn sich der schwenkbare Förderer (43) in der zweiten Position befindet.

6. Einführeinrichtung nach Anspruch 4 oder 5, **dadurch gekennzeichnet, dass** die Einführeinrichtung (16) eine zweite Schneideinheit (39) aufweist, die in Abzugsrichtung (R) in der ersten Förderstrecke (F1) im Bereich des schwenkbaren Förderers (43) vorgesehen ist, insbesondere in der nachlaufenden Hälfte des Bereichs des schwenkbaren Förderers (43); und/oder dass die Einführeinrichtung (16) eine dritte Schneideinheit (40) aufweist, die in Abzugsrichtung (R) in der zweiten Förderstrecke (F2) im Bereich der Walze (34) vorgesehen ist, insbesondere in dem auslaufenden Bereich der Walze (34).

7. Einführeinrichtung nach einem der Ansprüche 1 bis 3, **dadurch gekennzeichnet, dass** die Fördervorrichtung (32) eine Aufnahmestrecke (A) und einen Industrieroboter (70) mit einem Saugkopf oder Greifer (74) aufweist, wobei der Industrieroboter (70) dazu ausgebildet ist, zumindest einen Streifen (64) der Materialbahn (M) aus der Aufnahmestrecke (A) aufzunehmen und der Transportvorrichtung (24) der zweiten Reckanlage (14) und/oder einem statischen Förderer (52) der Fördervorrichtung (32) zu übergeben,
insbesondere wobei die Einführeinrichtung (16) eine zweite Schneideinheit (39) aufweist, die in Abzugsrichtung (R) im Bereich der Aufnahmestrecke (A) angeordnet ist, insbesondere in der nachlaufenden Hälfte des Bereichs der Aufnahmestrecke (A); und/oder dass die Einführeinrichtung (16) eine dritte Schneideinheit (40) aufweist, die in Abzugsrichtung (R) im Bereich der Walze (34) vorgesehen ist, insbesondere in dem nachlaufenden Bereich der der Walze (34).

8. Einführeinrichtung nach Anspruch 7, **dadurch gekennzeichnet, dass** die Fördervorrichtung (32) eine weitere erste Schneideinheit (38) und einen zweiten Industrieroboter (70) mit einem Saugkopf oder Greifer (74) aufweist, wobei der zweite Industrieroboter (70) dazu ausgebildet ist, einen weiteren Streifen (64) der Materialbahn (M) aus der Aufnahmestrecke (A) aufzunehmen und der Transportvorrichtung (24) der zweiten Reckanlage (14) und/oder einem statischen Förderer (52) der Fördervorrichtung (32) zu übergeben.

9. Einführeinrichtung nach einem der Ansprüche 1 bis 3, **dadurch gekennzeichnet, dass** die Fördervorrichtung (32) einen ersten Förderer (76) und einen zweiten Förderer (78) aufweist, der nachlaufend zum ersten Förderer (76) ist, insbesondere wobei die erste Schneideinheit (38) zwischen dem ersten und dem zweiten Förderer (76, 78) angeordnet ist und/oder der Materialspeicher (36) nachlaufend zum zweiten Förderer (78) vorgesehen ist,
insbesondere wobei der erste Förderer (76) und/oder der zweite Förderer (78) an wenigstens einer seiner Seiten in Abzugsrichtung (R) einen schwenkbaren Unterstützungsflügel (82) aufweist, wobei die Schwenkachse des Unterstützungsflügels (82) in Abzugsrichtung (R) verläuft und der Unterstützungsflügel (82) die Auflagefläche des jeweiligen Förderers (76, 78) in Querrichtung (Q) vergrößert, wenn er nach oben verschwenkt ist.

10. Anlage zur Verarbeitung einer Materialbahn (M), mit einer ersten Reckanlage (12), insbesondere einer Längsreckanlage, einer zweiten Reckanlage (14), insbesondere einer Querreckanlage, sowie einer Einführeinrichtung (16) nach einem der vorhergehenden Ansprüche, insbesondere wobei die Einführeinrichtung (16) zwischen der ersten Reckanlage (12) und der zweiten Reckanlage (14) angeordnet und dazu ausgebildet ist, die Materialbahn (M) am Ausgang der ersten Reckanlage (12) zu empfangen und in die zweite Reckanlage (14) einzuführen.

11. Anlage nach Anspruch 10, **dadurch gekennzeichnet, dass** die zweite Reckanlage (14) eine Transportvorrichtung (24) mit einem Paar Einlaufschienen (31) aufweist, insbesondere wobei die Einlaufschienen (31) jeweils eine obere Führungsplatte (84) aufweisen, die in Querrichtung (Q) verfahrbar ist und angetriebene Führungsrollen hat,
insbesondere wobei die Fördervorrichtung (32) an die Transportvorrichtung (24) anschließt, insbesondere wobei der schwenkbare Förderer (43) in der zweiten Position an die Einlaufschienen (31) anschließt oder der statische Förderer (52) an die Einlaufschienen (31) anschließt; oder dass der zweite Förderer (78) zumindest teilweise zwischen den Einlaufschienen (31) der zweiten Reckanlage (14) angeordnet ist.

12. Verfahren zum automatischen Einführen einer Materialbahn (M) von einer ersten Reckanlage (12), insbesondere einer Längsreckanlage, zu einer zweiten Reckanlage (14), insbesondere einer Querreckanlage, mittels einer automatischen Einführeinrichtung (16), insbesondere gemäß einem der Ansprüche 1 bis 18, **gekennzeichnet durch** die folgenden Schritte:
- Empfangen der Materialbahn (M) von der ersten Reckanlage (12) durch die Einführeinrichtung (16),
- Übergeben wenigstens eines Streifens der Materialbahn (M) an die zweite Reckanlage (14) durch die Einführeinrichtung (16).

13. Verfahren nach Anspruch 12, **gekennzeichnet durch** die folgenden weiteren Schritte:
- Fördern der Materialbahn (M) zu einem Materialspeicher (36) der Einführeinrichtung (16),
- Teilen der Materialbahn (M) in Abzugsrichtung (R) in einen Führungsstreifen (64) und einen Hauptstreifen (66) mittels einer ersten Schneideinheit (38) der Einführeinrichtung (16), oder Teilen der Materialbahn (M) in Abzugsrichtung (R) in zwei Führungsstreifen (64) und einen zwischen den Führungsstreifen (64) liegenden Hauptstreifen (66) mittels zwei ersten Schneideinheiten (38) der Einführeinrichtung (16),
- Abtrennen des einen Führungsstreifens (64) oder der beiden Führungsstreifen (64) in Querrichtung (Q) durch eine zweite Schneideinheit (39) der Einführeinrichtung (16),
- Aufnehmen des einen Führungsstreifens (64) oder der zwei Führungsstreifen (64) durch eine Fördervorrichtung (32) der Einführeinrichtung (16),
- Übergeben des einen Führungsstreifens (64) oder der zwei Führungsstreifen (64) an die zweite Reckanlage (14) durch die Fördervorrichtung (32) der Einführeinrichtung (16), und
- Befestigen, insbesondere Einkluppen, einer Außenkante des einen Führungsstreifens (64) oder jeweils einer Außenkante der zwei Führungsstreifen (64) an einer Transportvorrichtung (24) der zweiten Reckanlage (14),
insbesondere wobei die Materialbahn (M) von einem Einzugswerk (46) des Materialspeichers (36) gegriffen wird und in den Materialspeicher (36) gefördert wird.

14. Verfahren nach Anspruch 13, **dadurch gekennzeichnet, dass** der schwenkbare Förderer (43), insbesondere der Abschnitt des schwenkbaren Förderers (43), auf denen der oder einer der Führungsstreifen (64) läuft, in die zweite Position verfahren wird, wenn der entsprechende Führungsstreifen (64) von der zweiten Schneideeinheit (39) abgetrennt wurde, oder
dass der Saugkopf oder Greifer (74) des Industrieroboters (70) einen der Führungsstreifen (64) aufnimmt und dann an die zweite Reckanlage (14) übergibt, wenn der jeweilige Führungsstreifen (64) von der zweiten Schneideeinheit (39) abgetrennt wurde, oder
dass, wenn der jeweilige Führungsstreifen (64) von der zweiten Schneideeinheit (39) abgetrennt wurde, die Einlaufschiene (31), die dem Führungsstreifen (64) am nächsten ist, in Querrichtung (Q) zum zweiten Förderer (78) hin verfährt, bis die Außenkante des Führungsstreifens (64) in die Einlaufschiene (31) eingreift.

15. Verfahren nach einem der Ansprüche 12 bis 14, **gekennzeichnet durch** die folgenden weiteren Schritte:
- Verfahren der ersten Schneideeinheit (38) in Querrichtung (Q) vollständig durch den Hauptstreifen (66), sodass der Führungsstreifen (64) der Materialbahn (M) entspricht, und
- Befestigen, insbesondere Einkluppen, der weiteren Längskante (L2) der Materialbahn (M) an der Transportvorrichtung (24) der zweiten Reckanlage (14); oder
- Verfahren der zwei ersten Schneideeinheiten (38) in Querrichtung (Q) aufeinander zu und anschließendes entfernen der Schneideinheiten (38) aus der Materialbahn (M),
insbesondere wobei der Abschnitt (45) des schwenkbaren Förderers (43), auf denen der Hauptstreifen (66) läuft, in die zweite Position verfahren wird, bevor oder während die erste Schneideeinheit (38) verfahren wird, oder
wobei die Stütze (68) geschwenkt oder in der Höhe verstellt wird, sodass eine Förderstrecke (F2) von der Aufnahmestrecke (A) zur Transportvorrichtung (24) der zweiten Reckanlage (14) und/oder dem statischen Förderer (52) bereitstellt ist, bevor oder während die erste Schneideeinheit (38) verfahren wird, oder
dass, sobald, bevor oder nachdem die erste Schneideeinheit (38) verfahren wird, die andere der Einlaufschienen in (31) Querrichtung (Q) zum zweiten Förderer (78) hin verfährt, bis die weitere Längskante (L2) der Materialbahn (M) in die Einlaufschiene (31) eingreift.
